(19) **Europäisches Patentamt**

**European Patent Office**

**Office européen des brevets**

(11) **EP 1 351 048 A1**

(12) **EUROPEAN PATENT APPLICATION**
published in accordance with Art. 158(3) EPC

(43) Date of publication:
08.10.2003 Bulletin 2003/41

(51) Int Cl.⁷: **G01N 21/64**

(21) Application number: 01270763.4

(86) International application number:
**PCT/JP01/10998**

(22) Date of filing: 14.12.2001

(87) International publication number:
**WO 02/048693 (20.06.2002 Gazette 2002/25)**

(84) Designated Contracting States:
**DE FR GB SE**

(30) Priority: 14.12.2000 JP 2000380327
30.01.2001 JP 2001022105

(71) Applicant: **Olympus Optical Co., Ltd.**
**Tokyo 151-0072 (JP)**

(72) Inventors:
• **KATO, Noriko**
**Hachioji-shi, Tokyo 192-0046 (JP)**

• **SAKAMOTO, Hiroko**
**Shinagawa-ku, Tokyo 141-0022 (JP)**

(74) Representative:
**Kaiser, Jürgen, Dr.rer.nat.Dipl.-Chem. et al**
**Winter, Brandl, Fürniss, Hübner,**
**Röss, Kaiser, Polte**
**Partnerschaft**
**Patent- und Rechtsanwaltskanzlei**
**Alois-Steinecker-Strasse 22**
**85354 Freising (DE)**

(54) **FLUOROMETRIC ANALYZER AND FLUOROMETRIC ANALYSIS**

(57)    A fluorescence analysis apparatus for analyzing behaviors of fluorescent molecules includes a laser light source, a sample stage that supports a substrate on which a sample including fluorescent molecules is placed, an optical system that converges a light beam from the laser light source on the sample, thus forming a confocal region, a scanning mechanism that moves the confocal region by scanning over the sample, an optical system that converges fluorescence from the sample, a photodetector that detects the converged fluorescence, and fluorescence intensity recording means for recording a change in fluorescence intensity of the fluorescence detected by the photodetector.

FIG. 13

**Description**

Technical Field

The present invention relates to a fluorescence analysis apparatus and a fluorescence analysis method, which can stably and easily analyze behaviors of fluorescence-labeled biomolecules (especially intracellular biomolecules). The apparatus and method of this invention are applicable to measurements using a confocal optical system, such as fluorescence correlation spectroscopy analysis, fluorescence intensity distribution analysis, and fluorescence intensity multiple distribution analysis that performs these two analysis techniques at the same time.

Background Art

In the prior art, researches of protein function analysis have mainly been focused on analysis of gene sequences encoding proteins. However, with recent remarkable developments in human genome analysis, the focus of the protein function analysis researches have gradually shifted to an analysis of how proteins move and function within cells.

In the cells, various molecules with specific functions (e.g. functional proteins including enzymes and receptors; proteins, lipids and glycoproteins retaining cell structures; and biological active molecules such as ions) are constantly varying due to various gene expressions and signal transduction, and maintain their biological mechanisms.

For example, it is known that a series of proteins called receptors receive signal information and play important roles in signal transduction/response functions of cells. To be more specific, it is known that a receptor protein receives a signal substance, moves in the cell while interacting with another receptor of the same or different kind, another protein or nucleic acid, and altering its localized region in the cell, thereby inducing a signal-specific response reaction.

Thus, when a cellular response mechanism to a certain signal is to be analyzed, it is important to examine how a receptor protein molecule that receives the signal behaves in the cell. In addition, it is considered that such interactions of protein molecules in the cellular signal transduction/response function take place similarly in expression of other cellular functions. Hence, in analyzing the mechanism of such other cellular functions, it is also very important to examine the intracellular behaviors of the biomolecules.

For observation/analysis of such biological functions, it is desirable to observe the cell in its living state. Microscopy is known as a conventional method of observing the living cell. In the microscopy, however, the resolution is low and a molecule-level analysis is not possible. To compensate the low resolution of the optical microscope, a method has been developed wherein a biomolecule such as a protein is labeled with a fluorescent substance. In the fluorescence labeling method, however, in order to introduce a fluorescent substance into the cell, it is necessary to increase the permeability of the cell membrane or to inject a fluorescent substance into the cell. This leads to such a problem that toxicity or damage is caused in the cell.

Under the circumstances, new techniques have been developed for the analysis of biomolecules, and a progress has been achieved in specificity and sensitivity. In an example of such new techniques, a green fluorescent protein (GFP) is used as a marker and a target protein, which is labeled with the GFP, is observed. In this technique, a fusion gene of a gene coding for a target protein and a gene coding for a GFP are inserted into a vector, and the vector is introduced into a cell. Then, a fusion protein thereof is expressed and thereby the target protein is labeled. This technique is advantageous in that the behavior of the target protein can be observed while the cell is kept in the living state, since the GFP itself, which function as the marker, is a biomolecule derived from *Aequoria victoria* and has no toxicity to the cell.

In general, the fluorescence-labeled intracellular protein obtained according to the above technique is observed using a phase-contrast microscope or a differential interference microscope. The resolution of the phase-contrast microscope or differential interference microscope is about several-tenths $\mu$m. This resolution is enough to observe a microstructure in a living cell as an image, but not enough to minutely analyze the interaction of intracellular protein molecules.

Aside from the above-described method of observing the microscopic image through an eyepiece lens, there is known a method of analyzing a minute region using a confocal optical system, as a method of minutely analyzing the interaction of intracellular protein molecules. For example, fluorescence correlation spectroscopy (FCS) for measuring physical quantities such as the number and size of protein molecules has recently been developed. In the FCS, a fluctuation of a fluorescence-labeled target molecule in a medium is measured in a minute confocal region (measurement region) on the f ($10^{-15}$) L order, which is excited by laser beam irradiation, and minute movement of each target molecule is exactly measured using an autocorrelation function (Jerker Widengren, Rudorf Rigler, Cell. Mol. Biol. 44(5), 857-879). With this method, the physical quantities such as the number and size of protein molecules can be calculated.

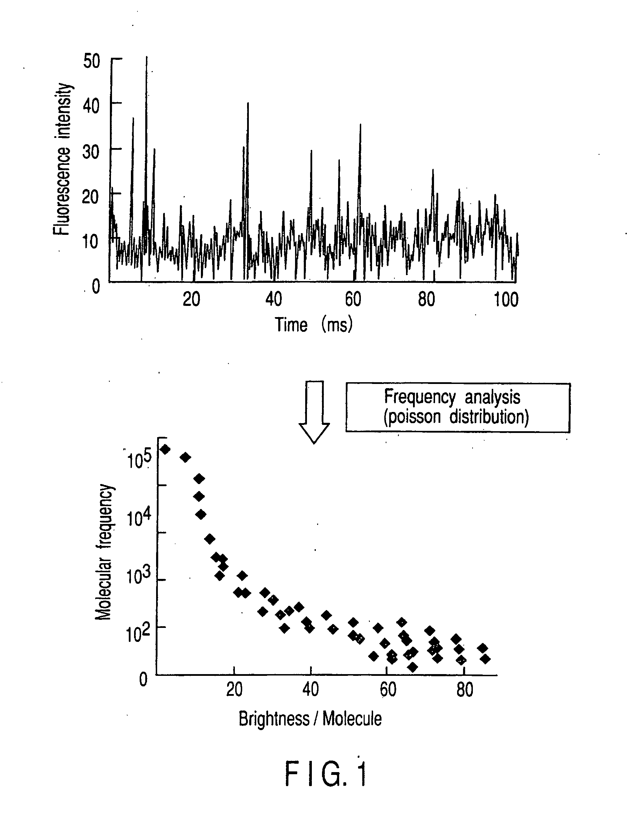

In addition, most recently, fluorescence intensity distribution analysis (FIDA) has been developed as a method of minutely analyzing the interaction of protein molecules, etc. (P. Kask, et al., PNAS 23, 96, 13761, 1999; WO 98/16814). In the FIDA, a fluctuation of a fluorescence-labeled target molecule in a medium is measured in a minute confocal region (measurement region) on the f $(10^{-15})$ L order, which is excited by laser beam irradiation, and the fluorescence intensity (brightness) per molecule and the number of fluorescent molecules are calculated by Poisson distribution function analysis (see FIG. 1). FIG. 1 illustrates an example in which a fluctuation in fluorescence intensity of fluorescent molecules coming in/out of a minute confocal region is subjected to Poisson distribution function analysis.

Further, fluorescence intensity multiple distribution analysis (FIMDA), which can perform FCS analysis and FIDA analysis at the same time, has been developed (K. Palo, Biophysical Journal, 79, 2858-2866, 2000). According to the FIMDA, it is possible to simultaneously obtain data on the translational diffusion time of fluorescent molecules, the number of molecules, and the fluorescence intensity (brightness) per molecule.

In each of the FCS, FIDA and FIMDA analysis techniques, a fluctuation of fluorescent molecules in the confocal region is measured, and the data obtained by the measurement is analyzed using associated functions.

So far, the FCS has principally been used in measuring a slight amount of fluorescent molecules included in a simple solution. However, methods and conditions for accurately measuring fluorescent molecules by FCS have not been examined or specified. In fact, fluorescent molecules are not stably analyzed. In particular, no study has been made of a method of measuring molecular motion of fluorescent molecules in a living cell using FCS. Furthermore, analysis methods have merely been proposed for the FIDA and FIMDA.

In general terms, while reactions of biomolecules are taking place in a predetermined reaction region. *in vivo,* distributions of the biomolecules are not uniform. It is thus difficult, even in cases other than the FCS, to obtain detailed measurement data with reproducibility with respect to biomolecules whose reactions take place in a given region *in vivo.*

In making the present invention, the inventors studied why a fluctuating motion of fluorescent molecules could not stably be analyzed by measuring techniques, such as FCS, using the confocal optical system, and also examined why an analysis on measurement of intracellular fluorescent molecules was difficult. The problems to be itemized below are peculiar to cases of analyzing fluctuations of fluorescent molecules. These problems have not been encountered in observing conventional fluorescent images.

The present invention has been made in consideration of the above circumstances, and its object is to improve measurement of the result of a reaction taking place in a given minute portion of a predetermined reaction region. In particular, this invention aims at providing an apparatus and a method for measuring a fluorescence intensity, that is a reaction result, with a high S (signal)/N (noise) ratio using a confocal optical system. In other words, this invention aims at stably and easily analyzing behaviors of fluorescence-labeled biomolecules (in particular, intracellular biomolecules).

More specifically, the invention aims at solving the following problems ① to ⑥ which have newly been posed in analyzing behaviors of biomolecules.

(1) Problems occurring due to properties generally possessed by a labeling fluorescent substance, when behaviors of fluorescence-labeled biomolecules are to be analyzed.

① In an initial time period of excitation light irradiation, the emission of fluorescence from the fluorescent substance is unstable, and the amount of fluorescence increases and decreases repeatedly. This being the case, in order to acquire data with reproducibility, data obtained through several measuring processes need to be used for analysis. This requires excess time and labor.

② A laser output for fluorescence analysis (e.g. analysis by FCS) is 0.5 mW, which is relatively high power for biomolecules. As a result, the emission of fluorescence from the fluorescent substance decreases within a measurement time period, which is disadvantageous for measurement. Such a decrease in the amount of fluorescence is called photobleaching. If such an apparent attenuation in fluorescence occurs during the measurement, a function set from the measurement data (autocorrelation function in the case of FCS) becomes improper.

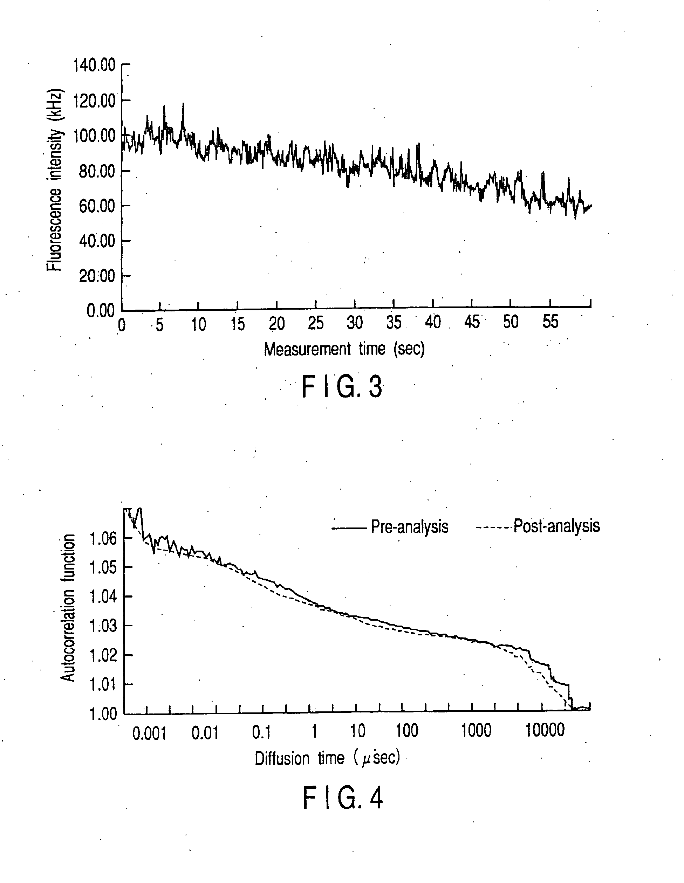

FIG. 3 illustrates an actual attenuation in fluorescence during FCS measurement (60 seconds). The data in FIG. 3 was obtained when a 1 mW laser beam was radiated on GFP-gene-introduced human cultured cells (MCF-7). The abscissa indicates an elapsed time of measurement, and the ordinate a fluorescence intensity (kHz). The graph line is formed by plotting variations in the fluorescent signal in units of 117 msec. It is understood from FIG. 3 that the fluorescence decreases from about 100 kHz to 60 kHz. FIG. 4 shows a result of the setting of the autocorrelation function based on the data in FIG. 3. The abscissa indicates a diffusion time (μ sec) and the ordinate the autocorrelation function. The solid line indicates actual measurement values, which were obtained prior to an analysis using the autocorrelation function. The broken line indicates values after the analysis of the actual measurement values using the autocorrelation function. It is understood, from FIG. 4, that the signal curve has an irregular profile in a region of 1000 μ sec or more. As shown in FIG. 4, if a conspicuous attenuation occurs in fluorescence within the measurement time period, the behaviors of molecules cannot accurately be analyzed using the autocorrelation function.

(2) Problems occurring when biomolecules functioning within the cell are analyzed.

③ When the inventors attempted to measure intracellular fluorescent molecules, they encountered some problems which do not occur in measuring fluorescent molecules included in a simple solution. In particular, the molecules in the solution, in many cases, are dispersed in a relatively uniform fashion. By contrast, the intracellular molecules, in many cases, are locally present in various intracellular locations (e.g. a cell membrane, an organelle such as mitochondria, or a cell nucleus) according to their functions.

Thus, when the behaviors of intracellular. molecules are analyzed using FCS, etc., it is important and imperative that a confocal region, which is a measurement region, be properly set at a location within the cell where target fluorescent molecules are locally present.

Then, the inventors further studied the problems, as stated below.

Cells, which serve as samples for measurement by FCS, etc., have various dimensions according to their kinds. In the case of a bottom-adhesion type cultured cell that is often used in experiments, it has a diameter of about 5 μm to 1000 μm and a thickness of about 3 μm to 50 μm, with a shape like a bowl turned upside down. Thus, when a confocal region is set at a specific location in the cell (e.g. in the nucleus), the confocal region has to be exactly positioned in a region much smaller than the size of the cell. In particular, a position in the thickness direction of the cell has to be exactly set within a very small region so that the confocal region may not depart from the sample cell. In this way, the measurement by FCS, etc. requires exact positioning of the confocal region within a very small region.

In addition, when physiochemical properties, such as a diffusion coefficient, of a specific target intracellular fluorescent molecule is to be determined by measurement using FCS, etc., measurement needs to be conducted not for a single cell but for at least several cells (preferably many cells) each including the same target molecule. It is clear that higher reproducibility and reliability of acquired values are ensured by determining physiochemical molecular properties, based a greater number of pieces of data.

However, the measurement by FCS, etc. is time-consuming since it is necessary to exactly set the confocal region within a very small region, and operations on many cells increases the time for measurement. Thus, the successive measurement of many cells requires appropriate and easy setting of the confocal region within the cells where the target fluorescent molecules are locally present.

One of the objects of the present invention, therefore, is to provide an apparatus and a method capable of appropriately and easily setting a confocal region at a location in a cell where target fluorescent molecules are locally present, thereby to analyze the behaviors of the intracellular molecules. In particular, the invention aims at providing an apparatus and a method capable of accurately and easily setting the position of the confocal region in the thickness direction of the cell, and also capable of setting the position of the confocal region with high reproducibility in the case of successively measuring many cells.

④ In the case where an intracellular molecule is used as a sample for measurement, multiple scattering peculiar to cells becomes noise, posing a serious problem in measuring a fluorescent signal. It is considered that the multiple scattering is due to the presence of an aromatic amino acid, which emits weak fluorescence, in a part of a protein constituting the cell.

(3) Problems occurring when a fluorescent protein is used as a labeling fluorescent substance.

⑤ The following problem arises when a fluorescent protein (e.g. GFP) is used as a fluorescent marker, whether a sample for measurement is an intracellular fluorescent molecule or a fluorescent molecule in a solution.

When the GFP is measured by FCS, the fluorescent signal varies and the concentration or molecular weight of the GFP molecule cannot accurately be measured. The variation in the fluorescent signal is due to a phenomenon called "blinking". As a result, the GFP molecule is measured by FCS as a molecule having a mass less than the actual mass.

An explanation will now be given of some reports on the blinking of GFP and the three-dimensional structure that results in the blinking. Since the GFP is a biomolecule derived from *Aequoria victoria,* temporary optical quenching of the fluorescent protein, that is, the phenomenon called "blinking," occurs when a laser beam having high intensity is radiated. The time period of the blinking is about two to three seconds (Dickson RM, Cubitt AB, Tsien RY, Moerner WE. Related Articles; On/off blinking and switching behaviour of single molecules of green fluorescent protein. Nature, 1997 Jul 24; 388 (6640): 355-8). It is reported that this phenomenon occurs since the GFP easily transits among three 3-dimensional structures of a cationic state, an anionic state and an amphoteric-ionic state, thus varying emitted fluorescence (Weber W, Helms v, McCammon JA, Langhoff PW. Free in PMC, Related Articles shedding light on the dark and weakly fluorescent states of green fluorescent proteins. Proc Natl Acad Sci USA. 1999 May 25; 96(11): 6177-82).

From the above two reports, it is presumed that the phenomenon of blinking takes place due to an alteration in three-dimensional structure of the GFP during laser irradiation. It is assumed that the laser irradiation causes electromagnetic waves or magnetic fields, whereby the GFP transits among the three three-dimensional structures of the cationic state, anionic state and amphoteric-ionic state in the measurement region, thus altering measurement data.

⑥ There is such a problem with the GFP molecule that a time delay occurs from reception of excitation light to stable emission of fluorescence.

The molecular weight of a conventional fluorescent. substance is 300 to 700 dalton, whereas that of the GFP molecule is about 27,000 dalton and is very large. Hence, a long time is needed from reception of excitation light to emission of fluorescence. The FCS measurement requires that the fluorescent signal be analyzed in units of a short time on the order of a microsecond. Thus, the length of. time needed from excitation to fluorescence emission is a problem that cannot be ignored.

As has been described above, one of the objects of the present invention is to provide an apparatus and a method capable of exactly analyzing the behaviors of biomolecules by causing target fluorescent molecules for measurement to stably emit light and by reducing noise.

Disclosure of Invention

In order to solve the above problems ① to ⑥ the present invention provides the following means.

(1) A fluorescence analysis apparatus comprising:

a laser light source;
an optical system that converges a light beam from the laser light source on a sample including fluorescent molecules, thus forming a confocal region;
an optical system that converges fluorescence from the sample;
a photodetector that detects the converged fluorescence; and
fluorescence intensity recording means for recording a change in fluorescence intensity of the fluorescence detected by the photodetector,

wherein after the light beam is radiated on the sample for a predetermined time period, the fluorescence intensity of the fluorescence from the fluorescence molecule excited by the light beam is measured, thereby acquiring analysis data relating to the fluorescence molecules.

(2) A fluorescence analysis apparatus comprising:

a laser light source;
an optical system that converges a light beam from the laser light source on a sample including fluorescent molecules, thus forming a confocal region;
an optical system that converges fluorescence from the sample;
a photodetector that detects the converged fluorescence;
fluorescence intensity recording means for recording a change in fluorescence intensity of the fluorescence detected by the photodetector; and
fluorescence intensity attenuation ratio detection means for detecting an attenuation ratio of a fluorescence intensity after a predetermined elapsed time, relative to an initial fluorescence intensity recorded by the fluorescence intensity recording means,

wherein (i) a fluorescence analysis is performed when a value of the attenuation ratio detected by the fluorescence intensity attenuation ratio detection means is less than a predetermined first value, (ii) further radiation of the light beam on the sample is successively performed and the attenuation ratio in fluorescence intensity is detected once again when the value of the attenuation ratio detected by the fluorescence intensity attenuation ratio detection means is not less than the predetermined first value and is less than a predetermined second value, and (iii) the light beam is radiated on the sample with a decreased intensity and the attenuation ratio in fluorescence intensity is detected once again when the value of the attenuation ratio detected by the fluorescence intensity attenuation ratio detection means is not less than the predetermined second value.

(3) A fluorescence analysis apparatus comprising:

a laser light source;

an optical system that converges a light beam from the laser light source on a sample including fluorescent molecules, thus forming a confocal region;

an optical system that converges fluorescence from the sample;

a photodetector that detects the converged fluorescence;

fluorescence intensity recording means for recording a change in fluorescence intensity of the fluorescence detected by the photodetector; and

light intensity adjusting means for adjusting an intensity of the light beam from the laser light source.

(4) A fluorescence analysis method for analyzing behaviors of fluorescent molecules, comprising:

(a) a step of converging a light beam from a laser light source on a sample including fluorescent a molecules, forming a confocal region, and radiating the light beam on the sample for a predetermined time period; and

(b) a step of radiating, following the step (a), the light beam from the laser light source onto the sample and forming a confocal region, detecting a fluorescence intensity of fluorescence from the fluorescent molecules in the confocal region, and performing a fluorescence analysis.

(5) A fluorescence analysis method for analyzing behaviors of fluorescent molecules, comprising:

(a) a step of converging a light beam from a laser light source on a sample including fluorescent molecules, and forming a confocal region;

(b) a step of detecting a fluorescence intensity of fluorescence from the fluorescent molecules within the confocal region formed in the step (a);

(c) a step of radiating the light beam for a predetermined time period after the detection of the fluorescence intensity in the step (b), and then detecting the fluorescence intensity of the fluorescence from the fluorescent molecules within the confocal region;

(d) a step of comparing the fluorescence intensities detected in the steps (b) and (c), and detecting an attenuation ratio in the fluorescence intensity; and

(e) a step of (i) performing a fluorescence analysis when the attenuation ratio detected in the step (d) is less than a predetermined first value, (ii) performing further radiation of the light beam on the sample and conducting the steps from the step (a) once again when the attenuation ratio detected in the step (d) is not less than the predetermined first value and is less than a predetermined second value, and (iii) radiating the light beam on the sample with a decreased intensity of the light beam and conducting the steps from the step (a) once again when the attenuation ratio detected in the step (d) is not less than the predetermined second value.

(6) A fluorescence analysis method for analyzing behaviors of fluorescent molecules, comprising:

(a) a step of converging a light beam from a laser light source on a sample having a cell including no fluorescent molecules, and forming a confocal region;

(b) a step of detecting a fluorescence intensity of fluorescence from the cell within the confocal region formed in the step (a);

(c) a step of adjusting an intensity of the light beam such that the fluorescence intensity detected in the step (b) becomes not higher than a predetermined value;

(d) radiating the light beam on a cell including fluorescent molecules with the intensity of the light beam adjusted in the step (c), and forming a confocal region; and

(e) detecting fluorescence from the fluorescent molecules within the confocal region in the cell formed in the step (d); and performing a fluorescence analysis.

(7) A fluorescence analysis apparatus comprising:

a laser light source;

a sample stage that supports a substrate on which a sample including fluorescent molecules is placed;

an optical system that converges a light beam from the laser light source on the sample, thus forming a confocal region;

a scanning mechanism that moves the confocal region by scanning over the sample;

an optical system that converges fluorescence from the sample;

a photodetector that detects the converged fluorescence; and

fluorescence intensity recording means for recording a change in fluorescence intensity of the' fluorescence detected by the photodetector,

wherein the confocal region is moved over the sample on the substrate by the scanning mechanism, the confocal region is set at an area in a vicinity of an area where the fluorescence intensity recorded by the fluorescence intensity recording means takes a maximum value, the light beam from the laser light source is radiated on the fluorescent molecules, and the fluorescence intensity of, fluorescence from the fluorescent molecules excited by the light beam is measured, whereby analysis data relating to the fluorescent molecules is acquired.

(8) A fluorescence analysis method for analyzing behaviors of fluorescent molecules, comprising:

(a) a step of placing a sample including fluorescent molecules on a substrate, converging a light beam from a laser light source on the substrate, and forming a confocal region;
(b) a step of moving the confocal region formed in the step (a) by scanning over the sample on the substrate, and measuring a fluorescence intensity distribution of fluorescence from the fluorescent molecules;
(c) a step of converging the light beam from the laser light source on an area in a vicinity of an area where a maximum value of intensity of the fluorescence measured in the step (b) is detected, and forming a confocal region; and
(d) a step of measuring a fluorescence intensity of fluorescence from the fluorescent molecules excited by the light beam, which comes from the confocal region formed in the step (c), thereby analyzing behaviors of the fluorescent molecules.

(9) A fluorescence analysis apparatus comprising:

a laser light source;
a sample stage that supports a substrate on which a sample including fluorescent molecules is placed;
an optical system that converges a light beam from the laser light source on the sample, thus forming a confocal region;
a scanning mechanism that moves the confocal region by scanning over the sample;
an optical system that converges fluorescence from the sample;
a photodetector that detects the converged fluorescence; and
fluorescence intensity recording means for recording a change in fluorescence intensity of the fluorescence detected by the photodetector,

wherein the confocal region is moved by scanning over the sample on the substrate by the scanning mechanism, and the confocal region is set at an area in a vicinity of an area where the fluorescence intensity recorded by the fluorescence intensity recording means takes a maximum value, and

wherein the light beam from the laser light source is radiated on the fluorescent molecules in the sample after the light beam is radiated on the sample for a predetermined time period, and the fluorescence intensity of fluorescence from the fluorescent molecules excited by the light beam is measured, whereby analysis data relating to the fluorescent molecules is acquired.

(10) A fluorescence analysis method for analyzing behaviors of fluorescent molecules, comprising:

(a) a step of placing a sample including fluorescent molecules on a substrate, converging a light beam from a laser light source on the substrate, and forming a confocal region;
(b) a step of movning the confocal region formed in the step (a) by scanning over the sample on the substrate, and measuring a fluorescence intensity distribution of fluorescence from the fluorescent molecules;
(c) a step of converging the light beam from the laser light source on an area near an area where a maximum value of intensity of the fluorescence measured in the step (b) is detected, and forming a confocal region;
(d) a step of radiating the light beam on the sample for a predetermined time period; and
(e) a step of radiating, following the step (d), the light beam from the laser light source on the sample and forming a confocal region, detecting a fluorescence intensity of fluorescence from the 'fluorescent molecules in the confocal region, and performing a fluorescence analysis.

Brief Description of Drawings

FIG. 1 is a view for explaining the outline of fluorescence intensity distribution analysis (FIDA);
FIG. 2 shows the structure of a fluorescence analysis apparatus according to a first embodiment of the present invention;

FIG. 3 is a graph showing a fluorescence intensity attenuation during measurement of intracellular fluorescent molecules;

FIG. 4 is a graph showing an autocorrelation function using fluorescence intensity data shown in FIG. 3;

FIG. 5 is a flow chart illustrating an example of a fluorescence analysis method according to the present invention;

FIG. 6 shows the structure of a fluorescence analysis apparatus according to a second embodiment of the present invention;

FIG. 7A schematically shows a sample measuring section wherein a light beam is converged on a sample;

FIG. 7B schematically shows a confocal region formed by convergence of a light beam;

FIG. 8 shows details of a scanning mechanism;

FIG. 9A and FIG. 9B show a sample cell wherein fluorescent molecules are locally present in a cell nucleus, FIG. 9A being a top view and FIG. 9B being a side view;

FIG. 10A and FIG. 10B are views for explaining detection of an upper surface of a slide chamber substrate, FIG. 10A being a schematic view illustrating a method of detecting the upper surface of the slide chamber substrate, and FIG. 10B being a graph showing a fluorescence intensity distribution in a Z-axis direction of the slide chamber substrate;

FIG. 11A and FIG. 11B are views for explaining measurement of an intracellular fluorescent molecule distribution, FIG. 11A being a schematic view illustrating a method of measuring a distribution of intracellular fluorescent molecules, and FIG. 11B being a graph showing a fluorescence intensity distribution in the Z-axis direction of the cell;

FIG. 12A and FIG. 12B are views for explaining the significance and advantage in detecting the upper surface of the slide chamber substrate in advance, FIG. 12A showing a case where the Z-axis position of the upper surface of the slide chamber substrate is not detected in advance, and FIG. 12B showing a case where the Z-axis position of the upper surface of the slide chamber substrate is detected in advance;

FIG. 13 shows the structure of a fluorescence analysis apparatus according to a third embodiment of the present invention;

FIG. 14 is a graph showing a difference in diffusion time measured by FCS, which is due to a difference in concentration of green fluorescent proteins (GFP);

FIG. 15 is a graph showing a difference in attenuation rate of fluorescence intensity, which is due to a difference in the number of times of laser irradiation;

FIG. 16 is a graph showing a difference in molecular number of fluorescent molecules measured by FCS, which is due to a difference in laser intensity;

FIG. 17 is a graph showing a difference in diffusion time of fluorescent molecules measured by FCS, which is due to a difference in laser intensity;

FIG. 18A is a graph showing a Z-axis fluorescence intensity distribution in the nucleus of a GFP/ER $\beta$ expression cell;

FIG. 18B shows an autocorrelation function by FCS measurement at each position of a confocal region;

FIG. 19A is a schematic view illustrating a method of measuring intracellular fluorescence intensity distribution data by FCS;

FIG. 19B is a graph showing a fluorescence intensity distribution in the Z-axis direction of the cell;

FIG. 20 shows photographs showing intracellular fluorescent molecule distribution data obtained by a confocal laser scanning microscope, i.e. photographs showing XY-plane slice fluorescence images (Z-axis scan images taken in units of 0.7 $\mu$m) obtained by the confocal laser scanning microscope;

FIG. 21 is a photograph (continuous with FIG. 20) showing intracellular fluorescent molecule distribution data obtained by a confocal laser scanning microscope, i.e. FIG. 21 being a photograph obtained by reconstructing the XY fluorescence images 1 to 18 of FIG. 20 in the Z-axis direction;

FIG. 22 is a view (associated with FIG. 21) showing intracellular fluorescent molecule distribution data obtained by the confocal laser scanning microscope, i.e. FIG. 22 being a graph showing a fluorescence intensity curve along an axis A in a central region of the cell nucleus shown in FIG. 21;

FIG. 23 is a graph showing the relationship between the GFP concentration and the measured number of molecules in FCS and FIDA measurements; and

FIG. 24 includes a sequential line graph showing the relationship between the GFP concentration and. fluorescence intensity (brightness) per molecule in FIDA measurement, and a bar graph showing the relationship between the GFP concentration and the ratio of dimeric GFP molecules.

Best Mode for Carrying Out the Invention

Embodiments of the present invention will now be described.

<First Embodiment>

[Fluorescence Analysis Apparatus]

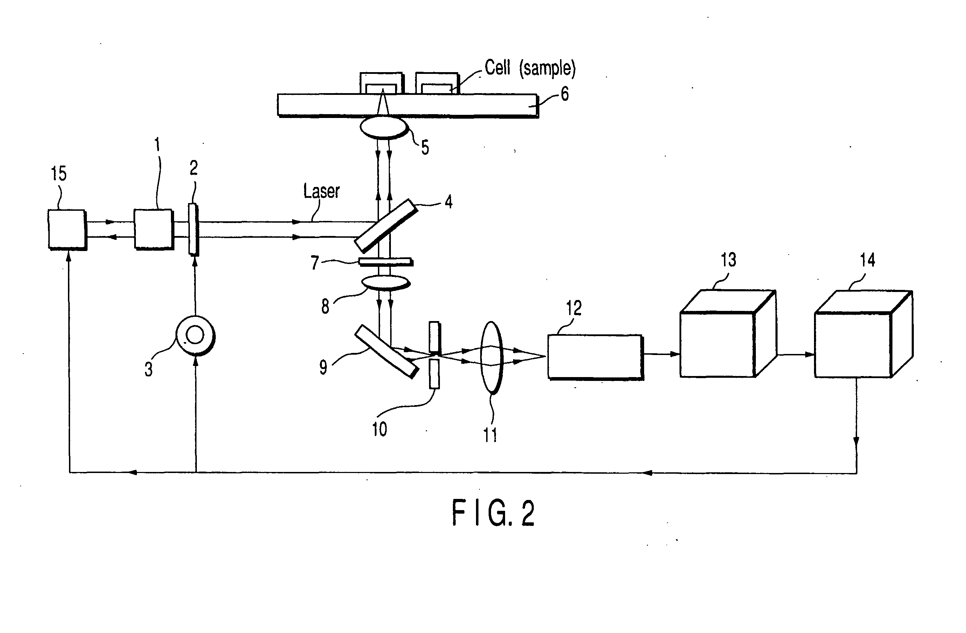

A fluorescence analysis apparatus according to a first embodiment of the present invention will be described with reference to FIG. 2.

As is shown in FIG. 2, the fluorescence analysis apparatus of this embodiment comprises a laser light source 1; light intensity adjusting means (ND filter) 2 for attenuating the intensity of a light beam from the laser light source 1; light attenuation selection means (ND filter changer) 3 for properly setting the light intensity adjusting means 2; an optical system, 4, 5, for converging the light beam from the laser light source 1 onto a sample, thereby forming a confocal region; a stage 6 on which samples including fluorescent molecules are placed; an optical system, 7 to 11, for converging fluorescence from the sample; a photodetector (avalanche photodiode) 12 for detecting the converged fluorescence; fluorescence intensity recording means (computer) 13 for recording a change in fluorescence intensity; fluorescence intensity attenuation ratio detection means (computer) 14 for detecting an attenuation ratio in fluorescence intensity; and a controller 15 for controlling a pre-irradiation time of a light beam. Thus, the fluorescence analysis apparatus of this invention makes use of a confocal laser microscope. The fluorescence intensity recording means 13 and fluorescence intensity attenuation ratio detection means 14 may be provided as separate devices, or a single computer may be designed to have the functions of both means.

In FIG. 2, a laser beam emitted from the laser light source 1 may be of any kind that can excite a fluorescent substance, such as an argon laser beam, a helium-neon laser beam, a krypton laser beam or a helium-cadmium laser beam.

The light intensity adjusting means (ND filter) 2, as shown in FIG. 2, may advantageously be provided in order to attenuate the intensity of the laser beam from the laser light source 1, thereby to optimize the laser output. For example, a laser attenuation filter (ND filter) may be used as the light intensity adjusting means 2. In the embodiment of the invention, as will be described later, two or more kinds of filters, preferably five or more kinds of filters, which have different degrees of attenuation of laser beam intensity, may be used to adjust the laser intensity.

The selection and setting of the proper light intensity adjusting means (ND filter) 2 may be performed by the light attenuation selection means (ND filter changer) 3. The light attenuation selection means (ND filter changer) 3 is a means for selecting and setting, under control of a computer, the light intensity adjusting means 2 so as to emit an optimal laser output.

In FIG. 2, the optical system, 4, 5, for converging a light beam from the laser light source onto the sample and creating a confocal region comprises a dichroic mirror 4 and an objective lens 5. A light beam emitted from the laser light source 1 travels along an optical path, as indicated by arrows in FIG. 2. The light beam enters the light intensity adjusting means (ND filter) 2. The light intensity adjusting means (ND filter) 2 attenuates the light beam according to its own degree of attenuation. The output light beam is then deflected by the dichroic mirror 4 toward the stage over 90 degrees relative to the direction in which the light beam has incident on the dichroic mirror 4. The light beam emanating from the dichroic mirror 4 passes through the objective lens 5 and falls on the sample on the stage 6. In this manner, the light beam is focused at a small spot on the sample, thus forming a confocal region.

In the present invention, the sample on the stage 6 may be a solution in which fluorescent molecules are suspended, or a cultured cell containing fluorescent molecules in its cell membrane or within the cell. The cell sample including fluorescent molecules is obtained by expressing within the cell a fusion protein of a fluorescent protein and protein molecules to be analyzed, using a publicly known genetic engineering technique.

In the apparatus according to the present embodiment, in a case where fluorescence intensity decreases as shown in FIG. 3, a light beam is radiated on the sample for a predetermined time period, and then fluorescence emitted from the sample is detected for fluorescence analysis. For this purpose, the laser light source 1 may be controlled by the controller 15 for effecting light beam radiation for a predetermined time period. The predetermined time period, in this context, is a time period which is needed from the reception of excitation light by the fluorescent molecule to be analyzed until the emission of fluorescence by the fluorescent molecule, and which does not cause a decrease in fluorescence to a level at which fluorescence measurement cannot be performed. For example, in the case where the fluorescent molecule to be analyzed is the fusion protein with GFP, the predetermined time period is, preferably, one to five minutes.

In FIG. 2, the optical system, 7 to 11, for converging fluorescence radiated from fluorescent molecules in the confocal region comprises a filter 7, a tube lens 8, a reflection mirror 9, a pinhole 10 and a lens 11. Fluorescence emitted from the fluorescent molecules travels along a path indicated by arrows in FIG. 2. To begin with, the fluorescence passes through the dichroic mirror 4 in the direction of travel of light. Then, the fluorescence passes through the filter 7 and tube lens 8 and is deflected by the reflection mirror 9. The deflected fluorescence is focused at the pinhole 10 and then converged on the photodetector 12 via the lens 11.

The photodetector (avalanche photodiode) 12 that detects the converged fluorescence converts the received optical signal to an electric signal and sends the electric signal to the fluorescence intensity recording means (computer) 13.

The fluorescence intensity recording means 13 that records a change in fluorescence intensity records and analyzes the received fluorescence intensity data. Specifically, when FCS analysis is performed, an autocorrelation function is set by analysis of the fluorescence intensity data. The motion of fluorescent molecules (e.g. an increase in molecular weight and a decrease in number of molecules due to dimerization of fluorescent molecules, or a decrease in number of molecules due to binding of fluorescent molecules to a DNA specific region of fluorescent molecules) can be detected on the basis of the change in autocorrelation function. If the obtained fluorescence intensity data is analyzed by FIDA, the motion of fluorescent molecules (e.g. an increase in fluorescence intensity (brightness) per molecule and a decrease in number of molecules due to dimerization of fluorescent molecules) can be detected. In addition, according to the fluorescence intensity multiple distribution analysis (FIMDA) that can simultaneously perform FCS analysis and FIDA, it is possible to simultaneously detect a change in molecular weight, a change in number of molecules and a change in fluorescence intensity per molecule.

Preferably, the fluorescence analysis apparatus according to the present embodiment should include the fluorescence intensity attenuation ratio detection means 14, as shown in FIG. 2. The fluorescence intensity attenuation ratio detection means 14 detects an attenuation ratio in fluorescence intensity. That is, the fluorescence intensity attenuation ratio detection means 14 compares an initial fluorescence intensity in a fluorescence measurement time (e. g. one minute) and a fluorescence intensity after a predetermined elapsed time (e.g. at the end of the fluorescence measurement time), thus detecting the attenuation radio.

As is shown in FIG. 3, the fluorescence intensity attenuates during fluorescence measurement time period (one minute). The fluorescence intensity attenuation ratio detection means 14 detects this attenuation ratio. A mean value of fluorescence intensity, for example, in the first five seconds in the fluorescence measurement time period, is used as the initial fluorescence intensity. On the other hand, a mean value of fluorescence, for example, in the last five seconds in the fluorescent measurement time period, is used as the fluorescence intensity after the predetermined elapsed time. Using each mean value, an attenuation ratio in fluorescence intensity after the predetermined elapsed time is obtained, assuming that the mean value of fluorescence intensity in the first five seconds is 100%.

As has been described in connection with the prior art, when the attenuation ratio during the measurement time period is high, a proper function (autocorrelation function in the case of FCS) cannot be obtained. Thus, the use of the attenuation ratio detection means makes it possible to determine the fluorescence attenuation ratio by computation in real time during the fluorescence measurement. It is therefore possible to efficiently acquire only an analyzable fluorescence signal.

The fluorescence analysis apparatus according to the present embodiment can be used as a fluorescence analysis apparatus for various purposes by altering the method of analyzing acquired fluorescence data. For example, by using FCS, FIDA or FIMDA as the analysis method, this fluorescence analysis apparatus can be used as a fluorescence correlation spectroscopy apparatus, a fluorescence intensity distribution analysis apparatus or a fluorescence intensity multiple distribution analysis apparatus, respectively.

A description below of a fluorescence analysis method should also be referred to, in connection with the operation of the fluorescence analysis apparatus of the present embodiment.

[Fluorescence Analysis Method]

A fluorescence analysis method capable of being carried out using the apparatus of the first embodiment will now be described in detail. Note that this fluorescence analysis method may be carried out without using the apparatus of the first embodiment.

A fluorescence analysis method of the present invention comprises:

a first step of converging a light beam from a laser light source on a sample including fluorescent molecules, forming a confocal region, and radiating the light beam on the sample for a predetermined'time period; and
a second step of radiating, following the first step, the light beam from the laser light source onto the sample and forming a confocal region, detecting a fluorescence intensity of fluorescence from the fluorescent molecules in the confocal region, and performing a fluorescence analysis.

The method will be described in a step-by-step manner.

In the first step, the sample including fluorescent molecules may be a solution in which fluorescent molecules are suspended, or a cell sample in which a fusion gene encoding a fusion molecule between a fluorescent protein (e. g. GFP) and a biomolecule (e.g. estrogen receptor) to be analyzed is expressed within a living cell. The cell sample may be prepared using a publicly known genetic engineering technique. The sample is placed on a substrate lying on the stage of the fluorescence analysis apparatus.

A light beam from the laser light source is converged on the freely chosen sample, thus forming a confocal region. The confocal region is formed when the light beam from the laser light source is concentratedly radiated via the objective lens at a minute point in the sample placed on the substrate lying on the stage. The volume of the confocal region serving as a measurement region for FCS measurement is about 0.24 fL (about 0.25 to 1.7 μ on each dimension).

With the confocal region being set on the sample, the light beam is radiated for a predetermined time period. The predetermined time period, in this context, is a time period within which fluorescence emitted from fluorescent molecules is stabilized and no decomposition or denaturing of fluorescent substance occurs. Specifically, in the case where fluorescent molecules are those of a GFP, the time of radiation should preferably be in a range of 1 to 5 minutes. More preferably, as will be described later, the attenuation ratio of fluorescence intensity of fluorescent molecules is measured, whereby the time of radiation of the light beam is adjusted.

Following the stabilization of fluorescence in the first step, the second step is performed to detect the intensity of fluorescence from the fluorescent molecules within the confocal region, thus effecting fluorescence analysis.

The fluorescence analysis is achieved by analyzing, using preferable analysis means, fluorescence intensity data obtained from fluctuations of fluorescent molecules within the confocal region. Usable analysis means include, as mentioned above, FCS analysis, FIDA and FIMDA.

In another embodiment, a fluorescence analysis method according to the invention comprises:

(a) a step of converging a light beam from a laser light source on a sample including fluorescent molecules, and forming a confocal region;
(b) a step of detecting a fluorescence intensity of fluorescence from the fluorescent molecules within the confocal region formed in the step (a);
(c) a step of radiating the light beam for a predetermined time period after the detection of the fluorescence intensity in the step (b), and then detecting the fluorescence intensity of the fluorescence from the fluorescent molecules within the confocal region;
(d) a step of comparing the fluorescence intensities detected in the steps (b) and (c), and detecting an attenuation ratio in the fluorescence intensity; and
(e) a step of (i) performing a fluorescence analysis when the attenuation ratio detected in the step (d) is less than a predetermined first value, (ii) performing further radiation of the light beam on the sample and conducting the steps from the step (a) once again when the attenuation ratio detected in the step (d) is not less than the predetermined first value and is less than a predetermined second value, and (iii) radiating the light beam on the sample with a decreased intensity of the light beam and conducting the steps from the step (a) once again when the attenuation ratio detected in the step (d) is not less than the predetermined second value.

This method will be described on a step-by-step manner.

{Step (a)}

To start with, in step (a), a confocal region is set on the sample including fluorescent molecules. The confocal region is a minute measurement region, as mentioned above.

{Step (b)}

In step (b), an initial fluorescence intensity of fluorescence from the fluorescent molecules within the confocal region is detected. The initial fluorescence intensity detected in this step may be a mean value of fluorescence intensity in an initial time (e.g. 5 seconds) of the fluorescence measurement time (e.g. one minute).

{Step (c)}

In step (c), the light beam is radiated for the predetermined time period (i.e. over the fluorescence measurement time), and then the intensity of fluorescence from the fluorescent molecules is detected once again. The fluorescence intensity detected in this step may be a mean value of fluorescence intensity in a last time (e.g. the last 5 seconds) of the fluorescence measurement time (e.g. one minute).

{Step (d)}

In step (d), the attenuation ratio in fluorescence intensity is detected from the values of the detected fluorescence intensities. On the basis of the value of the attenuation ratio, it is determined whether further light beam radiation is to be performed or not. The attenuation ratio can be displayed on the percentage scale, assuming that the initial fluorescence intensity is 100%.

{Step (e)}

In the case where (i) the attenuation ratio is less that a predetermined first value, e.g. less than 20%, there is no need to further radiate the light beam, and the fluorescence analysis is feasible. In the case where (ii) the attenuation ratio is not less than the first value and less than a predetermined second value, e.g. not less than 20% and less than 50%, further light beam radiation is performed and the steps from (a) is repeated, thus detecting the attenuation ratio. If the re-detected attenuation ratio is less than the first value, fluorescence analysis is performable. The time for the further light beam radiation in this case may be properly set according to the value of the attenuation ratio detected in step (d), but one to five minutes are preferable. In the case where (iii) the value of the attenuation ratio is not less than the second value, e.g. 50% or more, the intensity of the light beam is lowered and the steps from (a) is repeated. In this case, the intensity of the light beam is lowered to such a degree that no great attenuation occurs in the fluorescence intensity. The attenuation ratio is detected once again, and if it becomes less than the first value, the fluorescence analysis can be performed.

The attenuation ratio can be detected by the fluorescence intensity attenuation, ratio detection means 14 shown in FIG. 2.

The first value is set so as to exclude a case where improper function data (autocorrelation function data), as shown in FIG. 4, would be acquired due to a high attenuation ratio in fluorescence intensity. The second value is set so as to exclude a case where a great attenuation occurs in fluorescence intensity due to a high radiation laser intensity.

The first value should preferably be 10% to 30%, and more preferably 20%. The second value should preferably be 40% to 60%, and more preferably 50%.

As has been described above, it is desirable that the predetermined time period for radiating the light beam prior to the fluorescence analysis be a time period within which the attenuation ratio in fluorescence intensity decreases to less than the predetermined first value.

Next, the fluorescence analysis method according to the present invention will be described, referring to an example in which fluorescence data is analyzed (fluorescence correlation analysis) by FCS. Needless to say, the fluorescence analysis method according to this invention is not limited to the FCS analysis.

In the fluorescence analysis method of the present invention, fluorescence correlation analysis can be performed when the attenuation ratio in fluorescence intensity becomes less than a predetermined first value. More preferably, a fluorescence correlation analysis is performed when the attenuation ratio in fluorescence intensity is less than the predetermined first value and the fluorescence intensity detected in step (c) is less than a predetermined value (value A). That the fluorescence intensity is less than the predetermined value (value A) means that the concentration of fluorescent molecules is lower than a FCS detection limit. Specifically, the fluorescence intensity (value A) corresponding to the fluorescence intensity per fluorescent molecule multiplied by 100 is the detection limit. In this case, it is necessary to measure the fluorescence intensity per fluorescent molecule prior to the fluorescence correlation analysis.

As has been stated above, when the fluorescence intensity in the measurement region is lower than the detection limit, a fluorescence correlation analysis can be performed. More preferably, only in a case where a fluorescence signal obtained by fluorescence correlation analysis is not less than a theoretical value of diffusion time, the data for fluorescence correlation analysis is acquired. The calculation method for the theoretical value is illustrated in Example 1 (to be described later). The case where the diffusion time is not less than the theoretical value means the presence of mutual binding at a level of dimerization or more, or the presence of binding with other biomolecules (protein for instance). In the case of less than the theoretical value, it is expected that prescribed fluorescent molecules are not present.

On the other hand, when the attenuation ratio in fluorescence intensity is less than the predetermined first value and the fluorescence intensity detected in step (c) is not less than the predetermined value (value A), it is preferable to alter the measurement region of the sample. It is preferable to alter the measurement region and perform the fluorescence correlation analysis for the area (measurement region) with a lower fluorescence intensity. The area with a lower fluorescence intensity refers to a measurement region where the detected fluorescence intensity is less than the predetermined value (value A).

(Fluorescence correlation analysis method for intracellular fluorescent molecules)

When the fluorescence analysis method of the present invention is applied to intracellular fluorescent molecules, a confocal region is first formed on a sample having a cell including no fluorescent molecule, and the intensity of fluorescence from the cell is detected. Then, the light beam intensity is adjusted so that the fluorescence intensity decreases to a predetermined value or less.

In this case, the light beam intensity is set such that a fluorescence signal is not captured in the cell including no fluorescent molecule and a fluorescence signal is captured specifically in the cell in which a fluorescent protein is expressed, and that noise peculiar to the cell is minimized. The upper limit value (i.e. predetermined value) of the intensity of fluorescence emitted from the cell including no fluorescent molecules is preferably set at 1.0 kHz or less, for instance, for MCF-7 human mammary tumor cell.

The light beam intensity can be adjusted by the light intensity adjusting means 2 shown in FIG. 2.

Next, using the light beam intensity that is adjusted such that the fluorescence intensity of the cell without fluorescent molecules is the predetermined value or less, fluorescence of the cell including fluorescent molecules is detected and fluorescence correlation analysis is performed. Thereby, noise, such as scattering, peculiar to cells can be eliminated.

(Summary of Fluorescence Analysis Method)

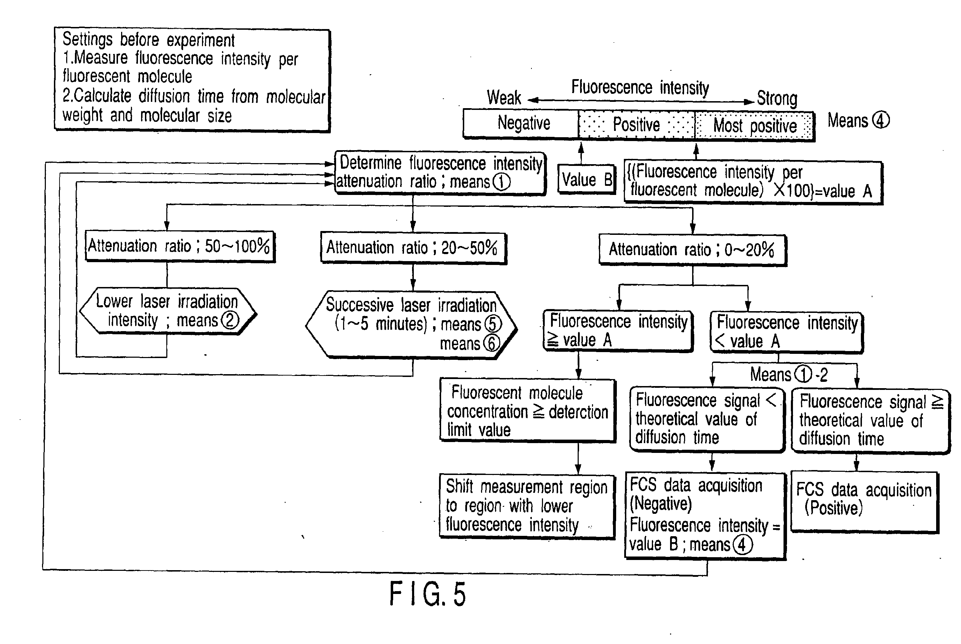

FIG. 5 illustrates a concretes method of the above-described fluorescence analysis method according to the present invention.

The method illustrate in FIG. 5, too, uses fluorescence data analysis by FCS (fluorescence correlation analysis). The fluorescence analysis method of this invention, however, is not limited to the analysis by FCS.

Means ① ,② ,④ , ⑤ and ⑥ shown in FIG. 5 are solution means associated with the prior-art problems ① , ② ,④ ,⑤ and ⑥

As the settings prior to FCS analysis, the fluorescence intensity per fluorescent molecule to be analyzed is measured in advance. Further, a theoretical value of diffusion time is calculated from the molecular weight and size of fluorescent molecules. The method of setting the theoretical value of diffusion time will be explained in connection with Examples to be described later.

In the fluorescence correlation analysis method illustrated in FIG. 5, a laser beam is radiated on the sample including fluorescent molecules, and an attenuation ratio in fluorescence amount is determined (means ① ). If the attenuation ratio is 50% or more, the intensity of the radiated laser beam is decreased to lessen the fluorescence attenuation (means ② ). The attenuation ratio in fluorescences amount is determined once again (means ① ). If the attenuation ratio in fluorescence amount is not less than 20% and is less than 50%/ the laser beam is successively radiated with its intensity maintained (means⑤ and ⑥ ). After the passing of a proper irradiation time of 1 to 5 minutes, the attenuation ratio in fluorescence amount is determined once again (means ① ). If the attenuation ratio in fluorescence amount is less than 20%, the fluorescence intensity in the confocal region is determined. Then, if the fluorescence intensity is not less than a pre-measured fluorescence intensity per fluorescent molecule multiplied by 100 (i.e. value A), the concentration of fluorescent molecules is not less than the detection limit. Thus, the confocal region is changed to another confocal region (measurement region). If the fluorescence intensity is less than value A, the diffusion time obtained from the fluorescence signal is compared with a pre-calculated theoretical value (value B) of diffusion time (means ① -2). If the value of the diffusion time obtained from the fluorescence signal is not less than the theoretical value, a "positive" state is determined and autocorrelation function data is acquired. On the other hand, if the value of the diffusion time obtained from the fluorescence signal is less than the theoretical value, a "negative" state is determined and autocorrelation function data is not acquired (means ④ ). In the case of "negative", the cell in the measurement region is changed, and the measurement region is shifted to another with high fluorescence. Then, the operational flow returns to the means ① and the attenuation ratio is measured once again.

As has been described above, the problems described in "BACKGROUND ART" are solved by the fluorescence analysis apparatus and fluorescence analysis method according to the first embodiment of the present invention.

Specifically, the problem with the fluorescent substance, i.e. ① the instability in initial fluorescence by radiation of excitation light, is solved by the following means: the attenuation ratio in fluorescence is determined, and a fluorescence signal not usable for fluorescence data analysis (FCS analysis) is not stored while only a signal usable for analysis is efficiently acquired. The problem with the fluorescent substance, i.e. ② the attenuation in fluorescence during measurement, is solved by the following means: the laser beam intensity is set to such a degree that attenuation in fluorescence hardly occurs, prior to data acquisition, because attenuation in fluorescence becomes conspicuous if the fluorescence amount on the sample is too large.

The problem ④ with noise such as multiple scattering peculiar to cells is solved by the following means: in order to obtain a good S/N (signal/noise) ratio, the laser beam intensity is set to such a degree that a proper light amount with minimum noise is obtained while the resolution is not degraded.

The problems ⑤ and ⑥ peculiar to fluorescent proteins are solved by the following means: the fluorescence amount is stabilized by radiating, in advance, a laser beam until the three-dimensional structure of fluorescent proteins is stabilized without the laser beam damaging or denaturing the fluorescent proteins.

As has been described above, according to the fluorescence analysis apparatus and fluorescence analysis method of the first embodiment of the present invention, data acquisition in an unstable state of fluorescence can be avoided during fluorescence measurement, and fluorescent molecules can stably be analyzed. In particular, the behaviors of biomolecules can exactly be analyzed by causing fluorescent molecules, which are to be analyzed, to stably emit fluorescence, while reducing noise. Thereby, the operations, which are complex, in particular, in measuring intra-cellular fluorescent molecules, can efficiently be performed.

<Second Embodiment>

[Fluorescence Analysis Apparatus]

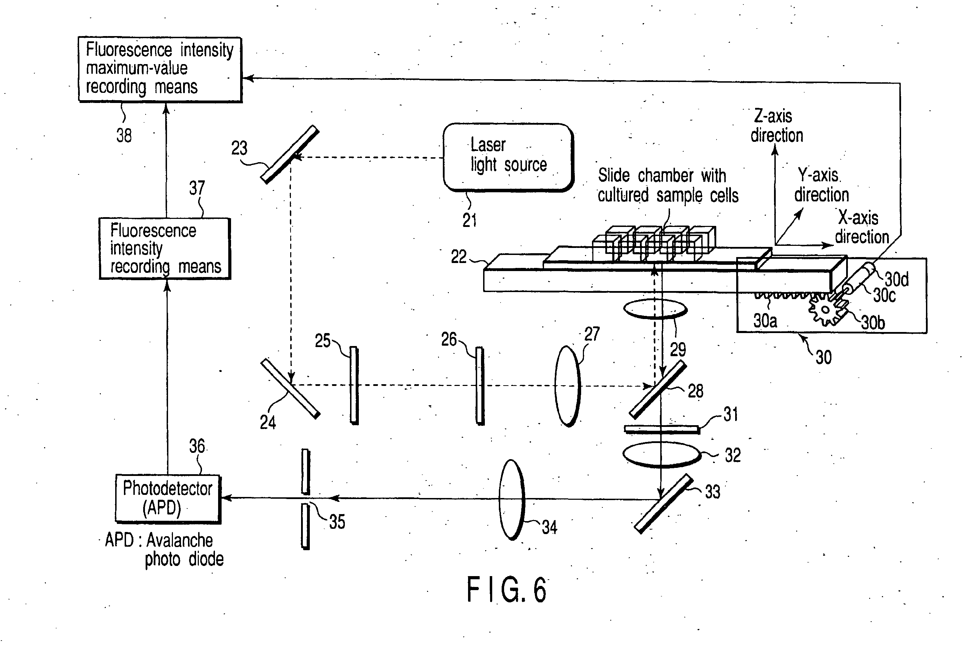

A fluorescence analysis apparatus according to a second embodiment of the present invention will be described with reference to FIG. 6.

As is shown in FIG. 6, the fluorescence analysis apparatus of this embodiment comprises a laser light source 21; a sample stage 22 for placement of a sample (e.g., a cell) including fluorescent molecules; an optical system, 23 to 29, for converging a light beam from the laser light source onto the sample, thereby forming a confocal region; a scanning mechanism 30 for movning the confocal region by scanning over the sample; an optical system, 31 to 35, for converging fluorescence from the sample; a photodetector 36 for detecting the converged fluorescence; fluorescence intensity recording means 37 for recording a change in fluorescence intensity; and fluorescence intensity maximum-value recording means 38 for detecting/recording a position indicative of a maximum fluorescence intensity when a fluorescence intensity distribution is measured. Thus, the fluorescence analysis apparatus of this invention makes use of a confocal laser microscope.

The fluorescence analysis apparatus of this embodiment will be described referring to, for example, a case where a cell including fluorescence molecules is used as a sample for analysis, which does not allow easy setting of a confocal region. Alternatively, a suspension of fluorescent molecules may be used as a sample for analysis.

In FIG. 6, the laser light source 21 for radiating a light beam on the cell sample may be any type of laser capable of exciting a fluorescent substance, such as an argon ion laser (488 nm, 514 nm) or a helium-neon laser (633 nm).

In FIG. 6, the sample stage 22, supporting a substrate on which the sample cell including fluorescent molecules is placed, is movable in horizontal directions (XY-axis directions in FIG. 6) and a vertical direction (Z-axis direction in FIG. 6). The sample cell is disposed on the sample stage 22 in the state in which the sample cell is placed on the substrate of a slide chamber containing a cell culture medium or a buffer solution. The sample cell containing fluorescent molecules is a cell prepared such that a fusion protein of a fluorescent protein and protein molecules to be analyzed is expressed within the cell.

In FIG. 6, the optical system, 23 to 29, for converging the light beam from the laser light source onto the sample, thereby forming the confocal region, comprises a reflection mirror 23, a reflection mirror 24, an interference filter 25, a spectro-filter (excitation filter) 26, a lens 27, a dichroic mirror 28 and an objective lens 29. The light beam from the laser light source 21 travels along a path indicated by a broken-line arrow in FIG. 6. The light beam is deflected by the reflection mirror 23 and reflection mirror 24. The deflected beam is attenuated through the interference filter 25 and the wavelength thereof is selected through the spectro-filter 26. The wavelength-selected beam passes through the lens 27 and is deflected toward the sample stage 22 by the dichroic mirror 28. The deflected beam is radiated via the objective lens 29 onto the sample cell on the sample stage 22. In this manner, the beam is converged on the sample at a minute point, thus forming a confocal region.

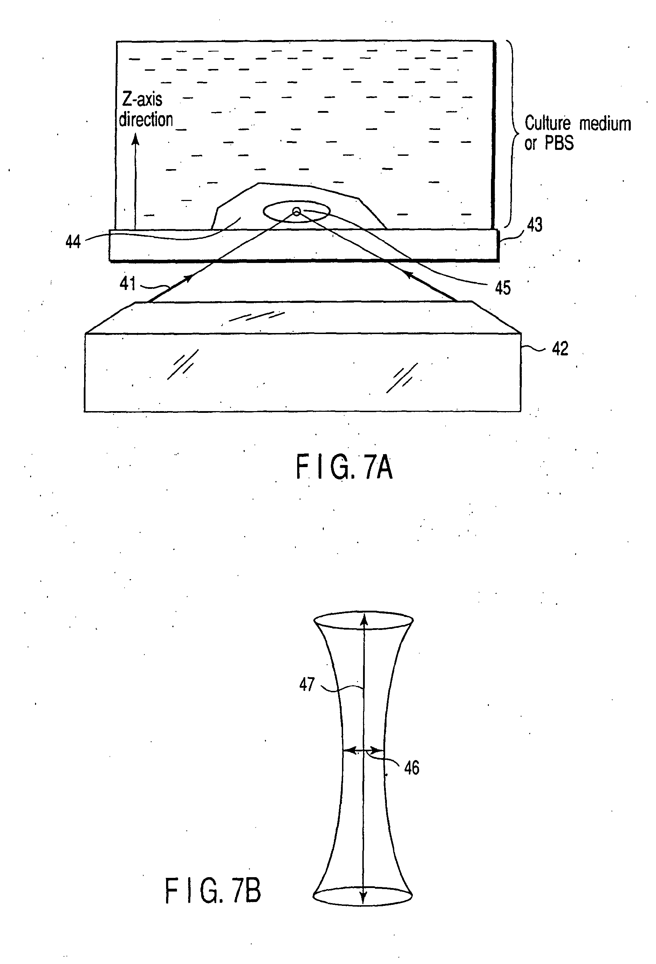

FIG. 7A schematically shows a sample measuring section wherein the light beam is converged on the sample, and FIG. 7B schematically shows the confocal region formed by the convergence of the light beam.

In FIG. 7A, a light beam 41 emitted from the laser light source is radiated and converged via an objective lens 42 on a small point (i.e. confocal region 45) within a sample cell 44 placed on a slide chamber substrate 43 on the stage. When the behaviors of intra-cellular fluorescent molecules are to be measured, the slide chamber is filled with a DMEM culture medium, a phosphate buffer solution (PBS), or the like.

FIG. 7B shows the confocal region serving as a measurement region for fluorescence analysis. The confocal region has a diameter (denoted by 46) of 0.4 $\mu$m, a major axis (denoted by 47) of 2 $\mu$m, and a volume of about $10^{-15}$ L.

In FIG. 6, the scanning mechanism 30 for moving the formed confocal region by scanning moves the sample stage 22, on which the cell sample is placed, in horizontal and vertical directions. In other words, the movement of the sample stage 22 is controlled by the scanning mechanism 30.

The scanning mechanism 30 comprises a rack 30a attached on a bottom surface of the sample stage 22, a pinion 30b meshing with the rack, a motor 30c for rotating the pinion, and an encoder 30d for detecting a rotational angle of the motor and outputting a detection result to the outside. The motor 30c is driven to rotate the pinion 30b. The pinion 30b transmits a driving force to the rack 30a, thus moving the sample stage 22. At the same time, the encoder 30d detects the rotational angle of the motor, and outputs a detection result to the fluorescence intensity maximum-value recording means 38. Thereby, the position of the sample stage is recorded. In this Figure, only the driving in the X-axis direction is illustrated. However, scanning is possible in the Y-and Z-axis directions by means of similar mechanisms. The rotary motor used in this embodiment may be replaced with an ultrasonic motor that is directly attached to the sample stage. Thereby, similar scanning is performed by moving the sample stage.

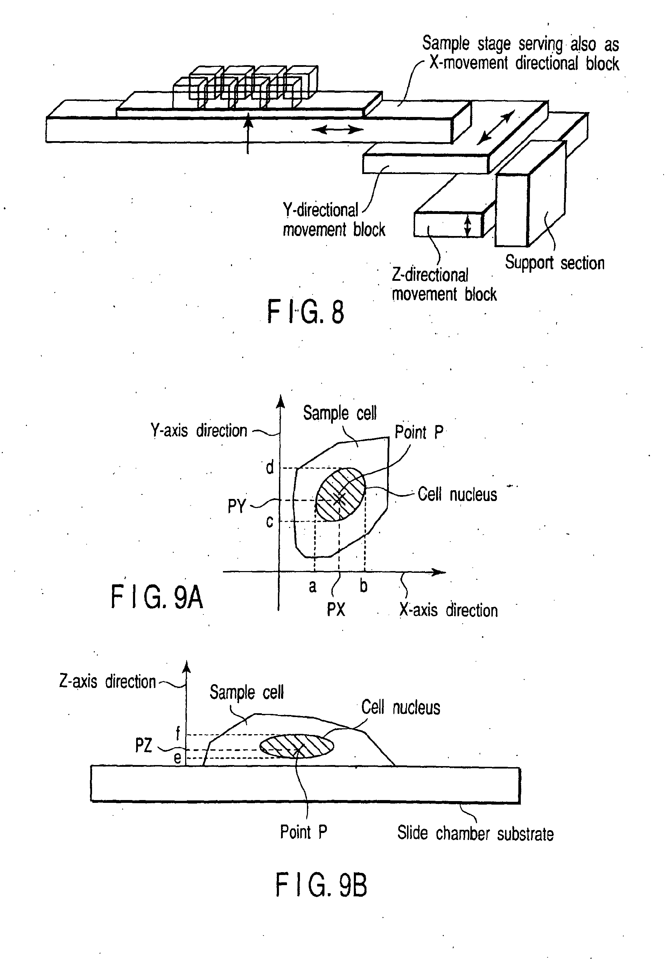

FIG. 8 shows details of the scanning mechanism capable of driving the sample stage in a longitudinal direction (X-direction), a transverse direction (Y-direction) and a vertical direction (Z-direction). In FIG. 8, X-directional movement is effected by moving the sample stage serving also as an X-directional movement block. Similarly, Y-directional movement is effected by moving a Y-directional movement block, and Z-directional movement is effected by moving a Z-directional movement block. In FIG. 8, the respective movement blocks are supported by a support section.

In the present invention, the scanning mechanism may be any kind of mechanism capable of effecting movements in X-, Y- and Z-directions.

The scanning in the Z-direction may be performed by mechanically moving an optical device (e.g. CCD camera) or the sample stage. Alternatively, substantial movement can be effected by means of a focusing mechanism for the optical device. In addition, instead of mechanically moving the optical device in the XY-directions, the XY-directional movement in a predetermined reaction area may be effected such that the focus position is moved in the XY directions by an optical path altering means such as a galvano-mirror in the state in which the optical device is kept at rest near the reaction region. However, in a case where a plurality of reaction regions are arranged on one support member, as in the case of a micro-plate or a DNA chip, it is preferable to mechanically move the optical device to the vicinity of each reaction region in the XY directions.

In the present invention; a liquid serving as the reaction region may be a drop-like spot present on a planar surface, or may be contained in a minute well, or may be retained by capillary force in a minute hollow capillary.

Using the above-described scanning mechanism, a confocal region is moved by scanning over the cell sample, and a confocal region can be set at a position where intracellular fluorescent molecules are present. Specifically, when a light beam is radiated at a position where intracellular fluorescent molecules are present, the fluorescent molecules are excited to emit fluorescence. Thus, by setting a confocal region in the vicinity of an area indicative of a maximum fluorescence intensity, this confocal regions is appropriately located at a position where the fluorescent molecules are present. The area indicative of the maximum fluorescence intensity can be detected by measuring a fluorescence intensity distribution within the sample with use of a fluorescence intensity scanning function of the analysis apparatus.

Preferably, the confocal region is set at an area near the area indicative of the maximum fluorescence intensity by scanning the sample on the substrate in a direction perpendicular to the surface of the substrate with use of the scanning mechanism. More preferably, a first scan is performed over a surface parallel to the substrate using the scanning mechanism. Then, the sample on the substrate is subjected to a second scan in a direction perpendicular to the surface of the substrate, with respect to an area in the vicinity of the area that indicates a maximum fluorescence intensity in the first scan. A confocal region is set at an area in the vicinity of the area that indicates a maximum fluorescence intensity in the second scan. In this case, the "area in the vicinity of the area that indicates a maximum fluorescence intensity" means an area having, preferably, a fluorescence intensity in a range of within 5 μm from the maximum value, and more preferably, a fluorescence intensity in a range of 1 μm from the maximum value.

More preferably, the fluorescence analysis apparatus of the present invention includes fluorescence intensity maximum-value recording means 38. The fluorescence intensity maximum-value recording means 38 records a maximum fluorescence intensity value that is obtained,when the laser beam from the laser light source is converged on a portion of the culture medium or buffer solution on the substrate where no cells are present, thus forming a confocal region, and the confocal region is moved by scanning in a direction perpendicular to the surface of the substrate. Thus, the fluorescence intensity maximum-value recording means 38 records a relative position of the confocal region in relation to the substrate.

The fluorescence intensity maximum-value recording means 38 is connected to the fluorescence intensity recording means 37 and records a fluorescence intensity slgnal from the fluorescence intensity recording means 37. The fluorescences intensity maximum-value recording means 38 is also connected to the scanning mechanism 30 and receives a signal indicative of the position of the sample stage 22 from the scanning mechanism 30. When the fluorescence intensity takes a maximum value, the fluorescence intensity maximum-value recording means 38 records the fluorescence intensity and the position of the sample stage at that time. Using these values, the confocal region can be set near a position preferable for fluorescence analysis.

Specifically, the fluorescence intensity maximum-value recording means 38 detects and records the position indicative of the maximum fluorescence intensity at the time when the fluorescence intensity distribution in the culture medium or buffer solution, where the sample cell is not present, has been measured in the direction perpendicular to the surface of the substrate. In this case, the position where the maximum fluorescence intensity is detected can be set to be the position of the upper surface of the substrate. The upper surface of the substrate may be detected using this means, whereby the confocal region may be moved by scanning only on the upper surface side of the substrate where the sample is present. With this scanning, the position where fluorescent molecules are present can be found easily and more appropriately.

In FIG. 6, the optical system, 31 to 35, for converging fluorescence from the fluorescent molecules in the confocal region comprises a spectro-filter (emission filter) 31, a tube lens 32, a reflection mirror 33, a lens 34 and a pinhole 35. The fluorescence emitted from the fluorescent molecules travels along a path indicated by a solid-line arrow in FIG. 6. The fluorescence passes through the dichroic mirror 28, and the wavelength thereof is selected through the spectro-filter 31. The wavelength-selected fluorescence passes through the tube lens 32 and is deflected by the reflection mirror 33. The deflected fluorescence passes through the lens 34 and a background light component, other than a focal plane component, is removed through the pinhole 35 at the confocal point. The fluorescence component emanating from the pinhole 35 falls on the photodetector 36.

The photodetector (APD: Avalanche Photo-Diode) 36 that detects the incoming fluorescence converts the received optical signal to an electric signal and delivers the electric signal to the fluorescence intensity recording means 37.

The fluorescence intensity recording means 37 for recording a change in fluorescence intensity records/analyzes the delivered fluorescence intensity data.

Specifically, when FCS analysis is to be performed, an autocorrelation function is set by analyzing the fluorescence intensity data. The motion of fluorescent molecules (e.g. an increase in molecular weight and a decrease in number of molecules due to dimerization of fluorescent molecules, or a decrease in number of molecules due to binding of fluorescent molecules to a DNA specific region of fluorescent molecules) can be detected on the basis of the change in autocorrelation function. If the obtained fluorescence intensity data is analyzed by FIDA, the motion of fluorescent molecules (e.g. an increase in fluorescence intensity (brightness) per molecule and a decrease in number of molecules due to dimerization of fluorescent molecules) can be detected. In addition, according to the fluorescence intensity multiple distribution analysis (FIMDA) that can simultaneously perform FCS analysis and FIDA, it is possible to simultaneously detect a change in molecular weight, a change in number of molecules and a change in fluorescence intensity per molecule.

The fluorescence analysis apparatus according to the present embodiment can be used as a fluorescence analysis apparatus for various purposes by altering the method of analyzing acquired fluorescence data.. For example, by using FCS, FIDA or FIMDA as the analysis method, this fluorescence analysis apparatus can be used as a fluorescence correlation spectroscopy apparatus, a fluorescence intensity distribution analysis apparatus or a fluorescence intensity multiple distribution analysis apparatus, respectively.

A description below of a fluorescence analysis method should also be referred to, in connection with the operation of the fluorescence analysis apparatus of the present embodiment.

[Fluorescence Analysis Method]

A fluorescence analysis method capable of being carried out using the apparatus of the second embodiment will now be described in detail. Note that this fluorescence analysis method may be carried out without using the apparatus of the second embodiment.

A fluorescence analysis method of the second embodiment comprises:

(a) a step of placing a sample including fluorescent molecules on a substrate, converging a light beam from a laser light source on the substrate, and forming a confocal region;

(b) a step of moving the confocal region formed in the step (a) by scannings over the sample on the substrate, and detecting fluorescence from the fluorescent molecules;

(c) a step of converging the light beam from the laser light source on an area in a vicinity of an area where a maximum value of intensity of the fluorescence detected in the step (b) is detected, and forming a confocal region; and

(d) a step of measuring a fluorescence intensity of fluorescence from the fluorescent molecules excited by the light beam, which comes from the confocal region formed in the step (c), thereby analyzing behaviors of the fluorescent molecules.

When FCS analysis is performed, a diffusion rate of the fluorescent molecules is analyzed and a physical amount of molecules is measured.

This method will now be described in a step-by-step manner.

{Step (a)}

A sample including fluorescent molecules, which is used in an example to be described below, is a cell sample in which a fusion gene encoding a fusion molecule between a fluorescent protein (e.g. GFP) and a biomolecule (e.g. estrogen receptor) to be analyzed is expressed within a living cell. The cell sample can be prepared using a publicly known genetic engineering technique. The living cell sample is cultured within a slide chamber, as shown in FIG. 6, for measurement by the fluorescence analysis apparatus.

The slide chamber is constructed such that chambers capable of containing liquid are disposed on a glass substrate about 130 μm thick. Cells can be cultured in the chambers filled with a culture medium. The use of an inverted microscope allows observation of the cells within the chambers, which are living in the culture medium.

The light beam from the laser light source is converged on the slide chamber substrate on which the cell sample is placed, and a confocal region is formed. The formation of the confocal region has already been described with reference to FIG. 7.

{Step (b)}

In step (b), the confocal region is moved by scanning using the scanning mechanism over the cell sample placed on the slide chamber substrate. Fluorescence emitted from the fluorescent molecules is detected. Preferably, a fluorescence intensity distribution at the time of moving the confocal region by scanning is measured. This measurement can be performed using the fluorescence intensity scan function of the fluorescence analysis apparatus.

Preferably, the confocal region in the cell sample is moved such that the confocal region is moved by scanning in a direction perpendicular to the surface of the substrate. More preferably, the scan operation is performed such that a plane parallel to the surface of the substrate is first scanned, following which a region with a value in a vicinity of a maximum value of fluorescence intensity detected in the first scan is scanned in a direction perpendicular to the surface of the substrate. This operation will now be described with reference to FIG. 9.

FIG. 9A and FIG. 9B are a top view and a side view of a sample cell placed over the sample stage, wherein fluorescent molecules are locally present within the cell nucleus. As is shown in FIG. 9A, it is assumed that a plane parallel to the surface of the sample stage (i.e. parallel to the surface of the substrate) is an XY plane and an X-axis direction and a Y-axis direction are set. In addition, as is shown in FIG. 9B, it is assumed that a direction perpendicular to the surface of the sample stage (i.e. an optical-axis direction) is a Z-axis direction.

To start with, a fluorescence intensity distribution is measured by scanning in the X-axis and Y-axis directions. Thus, a position P (PX, PY) on the XY axes, which is indicative of a maximum value of fluorescence intensity, is detected. Thereby, one point within a region (a-b) on the X-axis and a region (c-d) on the Y-axis, where the cell nucleus is present, is detected. Then, a Z-axis fluorescence intensity distribution at the point is measured by scanning, and a position P (PZ) on the Z-axis, which is indicative of a maximum value of fluorescence intensity, is detected. Thus, one point in a region (e-f) along the Z-axis,
where the cell nucleus is present, is detected.

In this manner, a confocal region is set at the point P (PX, PY, PZ) where the fluorescent molecules are present within the cell nucleus.

More preferably, the operation for setting the confocal region in the cell sample by scanning is as follows. To begin with, a light beam is converged on a portion of the culture medium or buffer solution, where the cell is not present, over the substrate on which the cell-containing sample is placed. Thereby, a confocal region is formed. The confocal region is moved by scanning in a direction perpendicular to the surface of the substrate. In this case, it is assumed that a position where a maximum value of fluorescence intensity is detected is present at the upper surface of the substrate. Then, the confocal region is moved by scanning only on the upper side of the substrate where the sample is present.

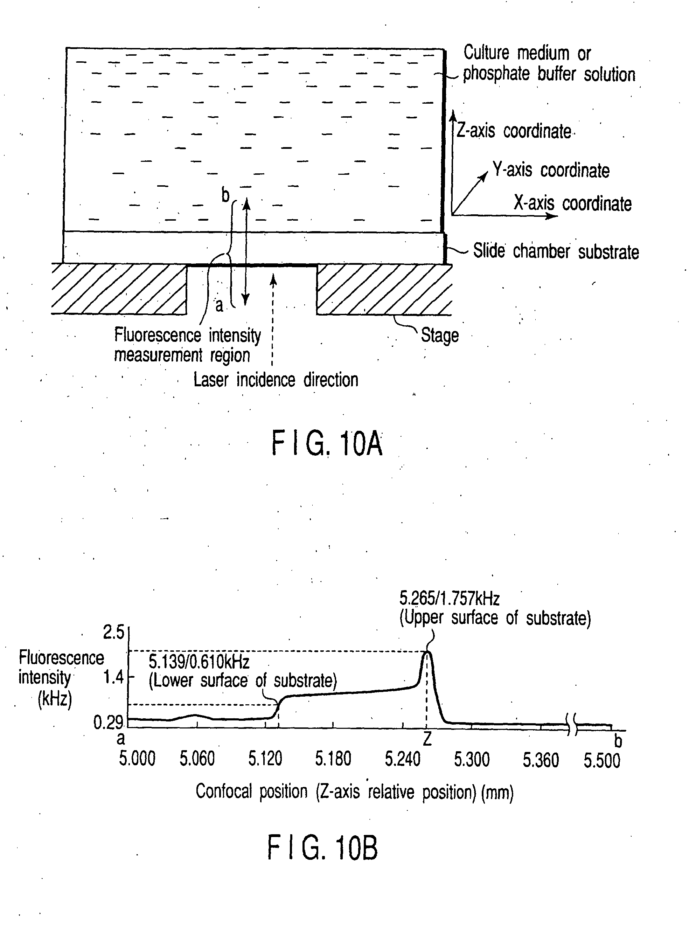

A specific operation for detection of the upper surface of the substrate will now be described with reference to FIG. 10.

As is shown in FIG. 10A, the movement of the sample stage is restricted in the horizontal direction (XY-axis directions) and the vertical direction, (Z-axis direction) . A region on the substrate supporting a cell-containing sample, where a cell is not present, is filled with a culture medium or a phosphate buffer solution. The region on the substrate where the cell is not present is moved in the XY-directions to the center of the visual field, and the position of the stage in the XY-directions is fixed. Then, while the restriction to the Z-axis movement is released, the laser beam is radiated. A fluorescence intensity distribution in a range (a-b) of about 500 μm in the Z-axis direction from the objective lens side to the sample side (a → b) is measured.

FIG. 10B shows a characteristic fluorescence intensity distribution obtained by this measurement. Since the part where the cell is not attached is measured, no fluorescent molecules are present with the measurement range and the fluorescence intensity (kHz) detected over the entire measurement range is very weak. However, very low peaks in fluorescence intensity appear in Z-axis coordinate corresponding to the upper surface and lower surface of the substrate. A rise in fluorescence intensity occurs in the region within the substrate so as to connect these peaks. This is a characteristic fluorescence intensity distribution obtained when the laser beam is made incident on the lower surface of the substrate, passes through the inside of the substrate, and goes out of the substrate into the sample (the culture medium in this case).

By reading the Z-axis coordinate of the higher peak position in FIG. 10B, the Z-axis position of the upper surface of the substrate can be detected.

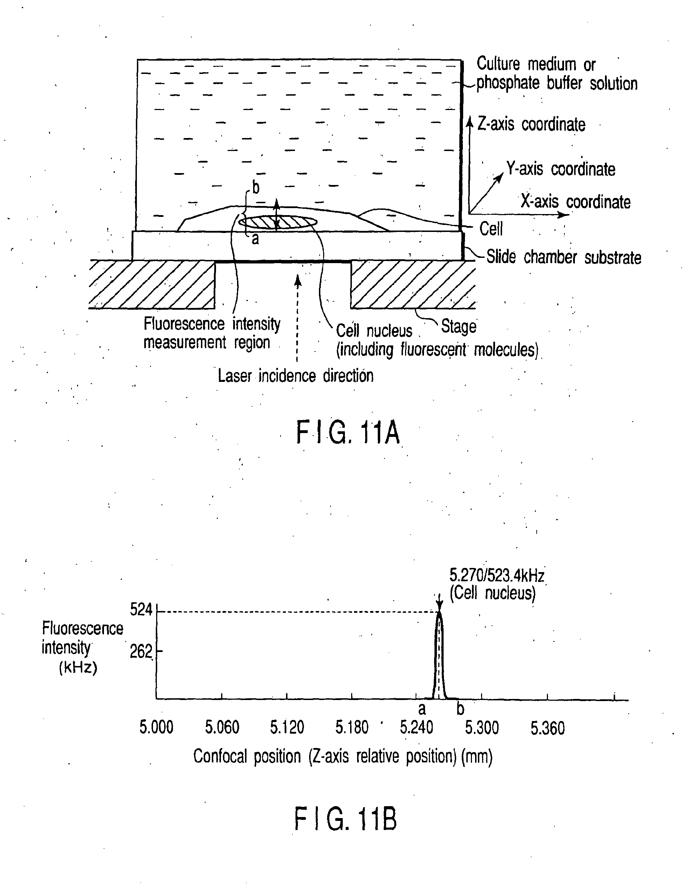

The operation for setting a confocal region at a position where intracellular fluorescent molecules are present will now be described with reference to FIG. 11.

As described above, after the Z-axis coordinate of the upper surface of the substrate is detected, a Z-axis coordinate of a confocal region is once set at the upper surface of the substrate and the Z-axis position of the stage is fixed. Then, movement restriction in XY-directions is released, and the part of the substrate with the cell attached is moved to the center of the visual field while the cultured cell is being observed by the microscope. If the laser beam is radiated at this position, a confocal region can be observed as a pinhole-like luminescent spot. Further, the position of the stage is finely adjusted in the XY-directions and the position of the stage in the XY-directions is fixed at the position where the confocal region is brightly observed.

While the laser beam is being radiated on the sample at this XY-coordinate position, a fluorescence intensity distribution is measured along the Z-axis (a → b in FIG. 11A) in a range of about 20 µm to 40 µm upward from the detected upper surface of the substrate.

FIG. 11B shows a typical fluorescence intensity distribution in this case. As is shown in FIG. 11B, a fluorescence intensity curve with a sharp peak can be obtained, and it is considered that fluorescent molecules are present at the peak position.

According to the above-described scan operation, the location of fluorescent molecules in each cell can be detected, and a confocal region can be set at a proper position in each cell.

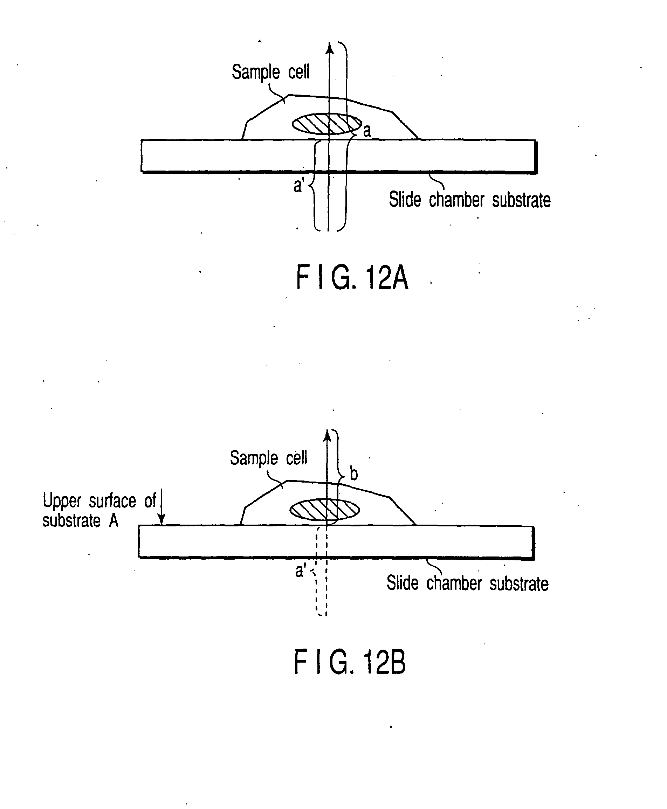

The significance and advantage of the above-described technique wherein the upper surface of the slide chamber substrate is detected in advance will be explained with reference to FIG. 12.

The sample cell adheres to the upper surface of the slide chamber substrate. Assume that the fluorescence intensity in the cell is now detected by scanning in the Z-axis direction. In a case of FIG. 12A where the Z-axis position of the upper surface of the slide chamber substrate is not detected, it is necessary to perform scanning over a range of a distance a. On the other hand, in a case of FIG. 12B where the Z-axis position A of the upper surface of the slide chamber substrate is detected, it should suffice to perform scanning over a range of a distance b from the position A, because intracellular fluorescent molecules are present somewhere above the position A of the upper surface of the substrate. Comparing both cases, it is clearly understood that the scan range can be decreased by a distance a' below the upper surface of the substrate in the case of FIG. 12B. It is also possible to prevent a confocal region from being set at an improper position departing from the cell.

Moreover, the slide chamber used in the measurement has high flatness. Once the Z-axis position A of the upper surface of the slide substrate is detected, it should suffice if a fluorescence intensity distribution is measured from the position A as the start point, with respect to the cells in the same chamber. Accordingly, many cells in the same chamber can efficiently be measured in succession. The efficient measurement can reduce the time of laser beam radiation on fluorescent molecules and suppress weakening of fluorescence or decomposition of fluorescent substances.

In the case where the cells in the same chamber are to be measured in succession, when the object of measurement is shifted from one cell to another, the stage is moved in a direction parallel to the surface of the stage (i.e. X-axis direction and Y-axis direction). This operation may often cause positional displacement in a direction (i.e. Z-axis direction) perpendicular to the surface of the stage. In this case, however, if the Z-axis position of the upper surface of the substrate is detected in advance, such a positional displacement can easily be corrected on the basis of the position information.

{Step (c)}

In step (c), the light beam is converged on an area in the vicinity of a position where a maximum value of intensity of the fluorescence is detected in the step (b) (i.e. an area with a fluorescence intensity close to the maximum value), and a confocal region is formed. In this case, the area in the vicinity of a position where a maximum value is detected (i.e. an area with a fluorescence intensity close to the maximum value) is an area in a range of within 5 µm from the maximum value, and more preferably, in a range of 1 µm from the maximum value.

In step (c), the light beam is radiated on intracellular fluorescent molecules, and the fluorescent molecules are excited to emit fluorescence.

{Step (d)}

In the last step (d), the intensity of fluorescence from the fluorescent molecules excited by the light beam, which comes from the confocal region formed in the step (c), is measured, thereby analyzing behaviors of the fluorescent molecules. When FCS analysis is performed, a diffusion rate of the fluorescent molecules is analyzed and a physical amount of molecules is measured in step (d).

The fluorescence correlation spectroscopy (FCS) is a technique wherein, as described above, a fluctuation of target molecules labeled with fluorescence in the medium is measured, and a minute motion of each target molecule is exactly measured using an autocorrelation function.

The application of FCS to the present invention will theoretically be explained below. In FCS, a fluorescence signal emitted from a confocal region in a sample is detected and quantitatively determined. In this case, fluorescence-labeled target molecules are moving in the medium, so a detected fluorescence intensity varies in accordance with a frequency of target molecules entering the confocal region and a time period in which the target molecules stays in the confocal region. If the apparent molecular weight increases due to, e.g. dimerization, the motion of target molecules becomes slower and the apparent number of molecules decreases. Consequently, the frequency of entering into a minute measurement region lowers, and the observed fluorescence intensity varies. On the basis of the change in fluorescence intensity, it is possible to track the apparent change in molecular weight of target molecules. In addition, a change in motion of target molecules and a change in local existence from a cytoplasm into a cell nucleus, due to interactions between the target molecules and other biomolecules (e.g. nucleic acid), can be detected in real time within the living cell as changes in diffusion time and number of molecules.

The FCS analysis that captures molecular fluctuation in a minute region is effective in specifically detecting intermolecular interactions with high sensitivity. To be more specific, a highest measurement sensitivity is obtained in a state in which fluorescent molecules are thinly present (i.e. a fluorescent molecule concentration being in a range of $10^{-10}$M to $10^{-7}$M). Therefore, molecules that are present in a small amount in the cell can be detected with high sensitivity.

As has been described above, the analysis of the behavior of fluorescent molecules is performed by analyzing fluorescence intensity data obtained from fluctuations of fluorescent molecules within the confocal region by using desired analysis means. Usable analysis means include FIDA and FIMDA, as mentioned above, in addition to FCS.

As has been described above, according to the fluorescence analysis apparatus and fluorescence analysis method of the second embodiment of the invention, the confocal region that is the measurement region can be properly and easily set at the position in the cell where target intracellular fluorescent molecules are locally present. Therefore, when many cells are successively measured, the behaviors of fluorescent molecules can be quickly and properly measured with high reproducibility.

Furthermore, the present invention uses the technique wherein a fluorescent protein (e.g. green fluorescent protein) is used to label intracellular protein molecules with fluorescence under the condition of low toxicity to the cell. Thereby, the behavior of a small amount of molecules in the living cell can be detected in real time.

<Third Embodiment>

[Fluorescence Analysis Apparatus]

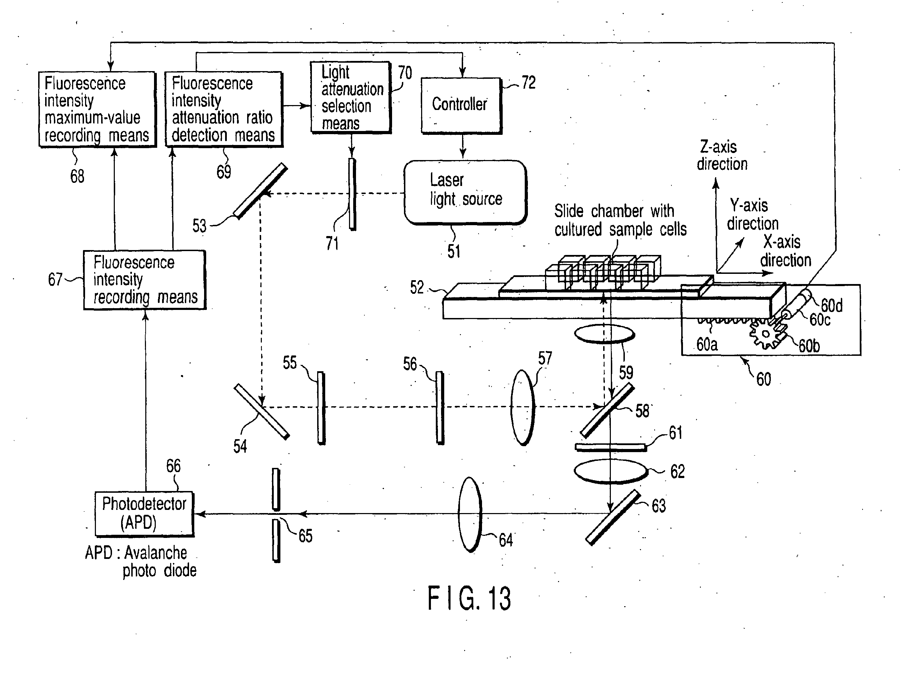

A fluorescence analysis apparatus according to a third embodiment of the present invention will be described with reference to FIG. 13.

The fluorescence analysis apparatus according to the third embodiment commonly includes the characteristic portions of the fluorescence analysis apparatus of the first embodiment and those of the fluorescence analysis apparatus of the second embodiment.

As is shown in FIG. 13, the fluorescence analysis apparatus according to this embodiment comprises a laser light source 51; a sample stage 52 for placement of a sample (e.g. a cell) including fluorescent molecules; an optical system, 53 to 59, for converging a light beam from the laser light source onto the sample, thereby forming a confocal region; a scanning mechanism 60 for moving the confocal region by scanning over the sample; an optical system, 61 to 65, for converging fluorescence from the sample; a photodetector 6.6 for detecting the converged fluorescence; fluorescence intensity recording means 67 for recording a change in fluorescence intensity; fluorescence intensity maximum-value recording means 68 for detecting/recording a position indicative of a maximum fluorescence intensity when a fluorescence intensity distribution is measured; fluorescence intensity attenuation ratio detection means 69 for measuring an attenuation ratio in fluorescence intensity after a predetermined elapsed time; light intensity adjusting means (ND filter) 71 for attenuating the intensity of the light beam from the laser light source; light attenuation selection means (ND filter changer) 70 for properly setting the light intensity adjusting means 71; and a controller 72 for a pre-irradiation time of the light beam from the laser light source.

In FIG. 13, the optical system, 53 to 59, for converging the light beam from the laser light source onto the sample, thereby forming the confocal region, comprises a reflection mirror 53, a reflection mirror 54, an interference filter 55, a spectro-filter (excitation filter) 56, a lens 57, a dichroic mirror 58 and an objective lens 59. The optical system, 61 to 65, for converging fluorescence from the fluorescent molecules in the confocal region comprises a spectro-filter (emission filter) 61, a tube lens 62, a reflection mirror 63, a lens 64 and a pinhole 65. The scanning mechanism 60 comprises a rack 60a attached on a bottom surface of the sample stage 52, a pinion 60b meshing with the rack, a motor 60c for rotating the pinion, and an encoder 60d for detecting a rotational angle of the motor and outputting a detection result to the outside.

The structural components of the apparatus of this embodiment are common to those of the apparatuses of the first and second embodiments. For details of these components, the preceding descriptions should be referred to.

The fluorescence intensity recording means 67, fluorescence intensity maximum-value recording means 68 and fluorescence intensity attenuation ratio detection means 69 may be provided as separate devices, or a single computer may be designed to have the functions of the two or three means.

[Fluorescence Analysis Method]

A fluorescence analysis method capable of being carried out using the apparatus of the third embodiment will now be described. Note that this fluorescence analysis method may be carried out without using the apparatus of the third embodiment.

The fluorescence analysis method according to the third embodiment commonly includes the characteristic portions of the fluorescence analysis method of the first embodiment and those of the fluorescence analysis method of the second embodiment.

A fluorescence analysis method of the third embodiment comprises:

(a) a step of placing a sample including fluorescent molecules on a substrate, converging a light beam from a laser light source on the substrate, and forming a confocal region;

(b) a step of moving the confocal region formed in the step (a) by scanning over the sample on the substrate, and measuring a fluorescence intensity distribution of fluorescence from the fluorescent molecules;

(c) a step of converging the light beam from the laser light source on an area near an area where a maximum value of intensity of the fluorescence measured in the step (b) is detected, and forming a confocal region;

(d) a step of radiating the light beam on the sample for a predetermined time period; and

(e) a step of radiating, following the step (d), the light beam from the laser light source on the sample and forming a confocal region, detecting a fluorescence intensity of fluorescence from the fluorescent molecules in the confocal region, and performing a fluorescence analysis.

The steps of the method of this embodiment are common to those of the methods of the first and second embodiments. For details of these steps, the preceding descriptions should be referred to.

The fluorescence analysis apparatus and fluorescence analysis method according to the third embodiment have the features of both the first and second embodiments and therefore have the advantages of both the first and second embodiments. Specifically, data acquisition in an unstable state of fluorescence can be avoided during fluorescence measurement, and fluorescent molecules can stably be analyzed. In particular, the behaviors of biomolecules can exactly be analyzed by causing fluorescent molecules, which are to be analyzed, to stably emit fluorescence, while reducing noise. Thereby, the operations, which are complex, in particular, in measuring intracellular fluorescent molecules, can efficiently be performed. Furthermore, the confocal region that is the measurement region can be properly and easily set at the position in the cell where target intracellular fluorescent molecules are locally present. Therefore, when many cells are successively measured, the behavior of fluorescent molecules can be quickly and properly measured with high reproducibility.

The apparatus and method of the present invention are applicable to any kind of analysis apparatus and method wherein a fluorescence amount from fluorescence-labeled target molecules in a limited minute measurement volume, such as a focal optical system, is measured, whereby a desired analysis result is obtained in detail from a sample including a larger volume than the measurement volume. A most useful measurement output can be obtained from the limited minute measurement volume. In order to achieve a highest data acquisition ratio, it is preferable to select one measurement volume by using the present invention. However, if measurement volumes at a plurality of predetermined locations are needed according to reaction principles or measurement principles, the present invention may be used to obtain optimal measurement outputs from the plural measurement volumes. If possible, sufficient data may be obtained from measurement volumes at a less number of locations than the predetermined number of locations. This remarkably reduces the cost and time for measurement.

The sample to be measured is not limited to the cell. The sample may be a predetermined quantity of liquid containing a biological material (e.g. nucleic acid, enzyme, hormone, allergen, antigen, antibody, or protein). The biological material in the sample solution to be measured may be fixed on the substrate or may not. However, in the above-described FCS, FIDA and FIMDA, it is preferable that fluorescent molecules serving as a labeling substance that emits a measurement signal be set in such a condition that the fluorescent molecules can fluctuate.

The means for containing the sample may be a minute tubular container such as a capillary-type reaction container (see EP 969083 A1); a porous container such as a filter-type reaction container (see USP 5843767); or a matrix-type container such as a microtiter plate. In addition, as a reagent for reaction with target molecules in the sample, at least one suspendable particle coated with the reagent may be included. If it is advantageous for data acquisition that the sample-containing means passes or reflects the measurement beam, the means may advantageously include a material with proper light transmissivity or light reflectivity.

Examples

(Example 1)

1. Setting of a theoretical value of diffusion time in autocorrelation function

When a radius of a confocal region is $\omega 1$, the diffusion time $= \omega 1^2/4D$, wherein D is a diffusion constant and expressed by

$$D = (k \cdot T)/(6\pi \cdot \eta \cdot r) \ [(kg \cdot K \cdot cm \cdot s \cdot m^2 \cdot 1000)/$$

$$(K \cdot kg \cdot cm \cdot s^2)] = (k \cdot T)/(6\pi \cdot \eta \cdot r) \ [m^2/s]$$

where $k = 1.38 \times 10^{-23}$ J/K, T = absolute temperature (293K), $\eta$ = viscosity, and r = radius of molecule.
The radios (r) of the molecule is expressed by

$$r = \sqrt[3]{\frac{3 \cdot m / N_A}{4\pi \cdot p}}$$

where NA = Avogadro constant, $6.023 \times 10^{23}$ mol$^{-1}$, and p = molecular density.
For example, the GFP molecule is 27,000 kilodalton. If the above equation is applied, the theoretical value of diffusion time in the FCS apparatus is 0.14 msec. Similarly, a fusion protein of GFP and estrogen hormone receptor is about 90,000 kilodalton, and it is estimated that the diffusion time is 0.22 msec.

2. Measurement of diffusion time by FCS measurement

Table 1 shows data obtained when a solution of GFP molecules were measured.

Table 1 Measurement result of GFP solution

| GFP (nM) | | Fluorescence intensity (kHz) | Fluorescence per molecule (kHz) | Actual measurement value of molecular number | Theoretical value of molecular number | Actual measurement value of diffusion rate (ms) | Theoretical value of diffusion rate (ms) |
|---|---|---|---|---|---|---|---|
| 0.01 | Mean | 0.82 | 0.39 | 2.39 | 0.0014 | 0.0542 | 0.1480 |
| | ±SD | 0.01 | 0.16 | 1.18 | | 0.0184 | |
| 0.1 | Mean | 1.01 | 2.21 | 0.46 | 0.0145 | 0.1584 | 0.1480 |
| | ±SD | 0.02 | 0.26 | 0.05 | | 0.0201 | |
| 1 | Mean | 3.18 | 8.99 | 0.35 | 0.1449 | 0.1530 | 0.1480 |
| | ±SD | 0.10 | 0.46 | 0.02 | | 0.0097 | |
| 10 | Mean | 32.03 | 9.23 | 3.44 | 1.4493 | 0.1607 | 0.1480 |
| | ±SD | 0.55 | 0.29 | 0.13 | | 0.0106 | |
| 100 | Mean | 436.92 | 9.50 | 48.81 | 14.4928 | 0.1689 | 0.1480 |
| | ±SD | 10.14 | 0.29 | 1.41 | | 0.0441 | |
| 1000 | Mean | 3938.82 | 39.11 | 100.00** | 144.9275 | 0.1403 | 0.1480 |
| | ±SD | 26.46 | | | | | |

** Measurement is impossible due to excessively large molecular number

**[0155]** TE solutions (Tris-EDTA; 10mM Tris-Cl, 1 mM EDTA) were used as solvents for GFP molecule solutions. Samples with six concentrations (0.01, 0.1, 1, 100, 1000 nM) were prepared with a common ratio of concentration being set at 10, and FCS measurement was performed for 20 μL of each sample. The measurement time was 60 seconds, and a mean value and a standard deviation (SD) of three measurements for each sample were indicated. At the concentration of 1 to 100 nM, a formed analytical curve was proportional, and the other low and high concentrations indicated no concentration-dependency. The number of molecules in the respective confocal regions were 1 nM = 0.35, 10 nM = 3.44, 100 nM = 48.81. In the FCS measurement, the number of molecules per confocal region is 100 at an upper limit for measurement. Hence, the number of molecules capable of being measured in a concentration-dependent manner is about 1 to 100. In terms of concentration, a general value is 0.01 to 700 nM, preferably 0.1 to 500 nM, and more preferably 1 to 100 nM.

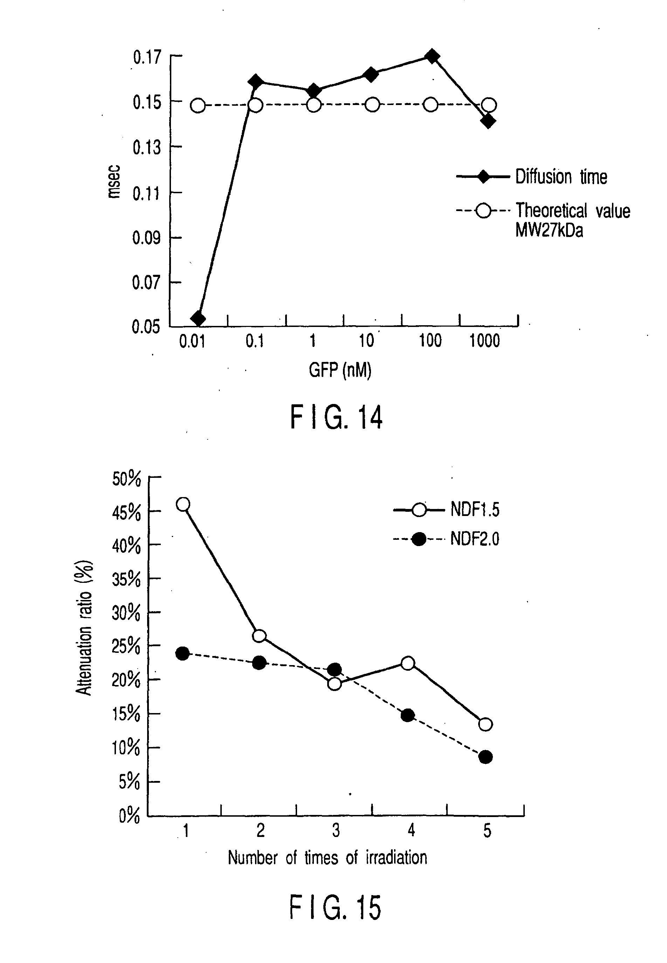

In FIG. 14, the diffusion time for each concentration is plotted. At the value of 1000 nM, which is higher than the upper limit for detection, the diffusion time was lower than the theoretical value and a correct analysis was not successfully conducted. At the low-concentration value of 0.01 nM, the diffusion time could not be found.

(Example 2)

3. Laser attenuation filter (NDF)

A fusion gene (sequence ID: No. 1) between estrogen receptor ERβ gene and GFP, which was incorporated in an expression vector, was introduced into a human mammary tumor cell strain MDA. This cell was subjected to FCS measurement, and a difference in attenuation ratio of fluorescence intensity due to the number of laser irradiation was examined.

FIG. 15 shows the examination result. The abscissa indicates the number of times of measurement in one minute with laser irradiation of 300 μW (NDF 1.5) and 100 μW (NDF 2.0). The ordinate indicates the attenuation ratio in fluorescence intensity. The NDF 1.5 is a laser attenuation filter with an attenuation degree of 3%, and the NDF 2.0 is a laser attenuation filter with an attenuation degree of 1%. If a laser beam of 10 mW is attenuated by the NDF 1.5, the intensity becomes 300 μW. If a laser beam of 10 mW is attenuated by the NDF 2.0, the intensity becomes 100 μW.

The attenuation ratio is a mean value (%) of fluorescence intensity in the last five seconds of measurement, assuming that a mean value of fluorescence intensity in the first five seconds is 100%. An autocorrelation function was set based on the respective data. After the third irradiation operation, an autocorrelation function indicative of a correct diffusion coefficient was set. It turned out from this that data with an attenuation ratio of less than 20% is correctly analyzable. In addition, it was understood that if the attenuation ratio is less than 50%, it can be reduced to less than 20% by successive laser irradiation, and a correct analysis can be performed.

4. Setting of laser intensity by optimization of laser attenuation filter (NDF)

A phenomenon such as extinction or decomposition of fluorescence occurs in intracellular biomolecules upon receiving a laser beam. In particular, when the energy of an exciting laser beam is high, a phenomenon such as extinction or decomposition of fluorescence during measurement tends to easily occur. It is therefore necessary to set an optimal attenuation filter.

An optimal laser intensity for FCS measurement was set by altering the NDF, using a sample in which a fluorescent protein (GFP recombinant; manufactured by Clontech) is suspended in a TE solution at a concentration of 10 nM.

The following NDFs were used: 0 (attenuation degree: 0%), 0.3 (attenuation degree: 50%), 0.5 (attenuation degree: 30%), 1.0 (attenuation degree: 10%), 1.5 (attenuation degree: 3%), 2.0 (attenuation degree: 1%), and 4.0 (attenuation degree: 0.01%).

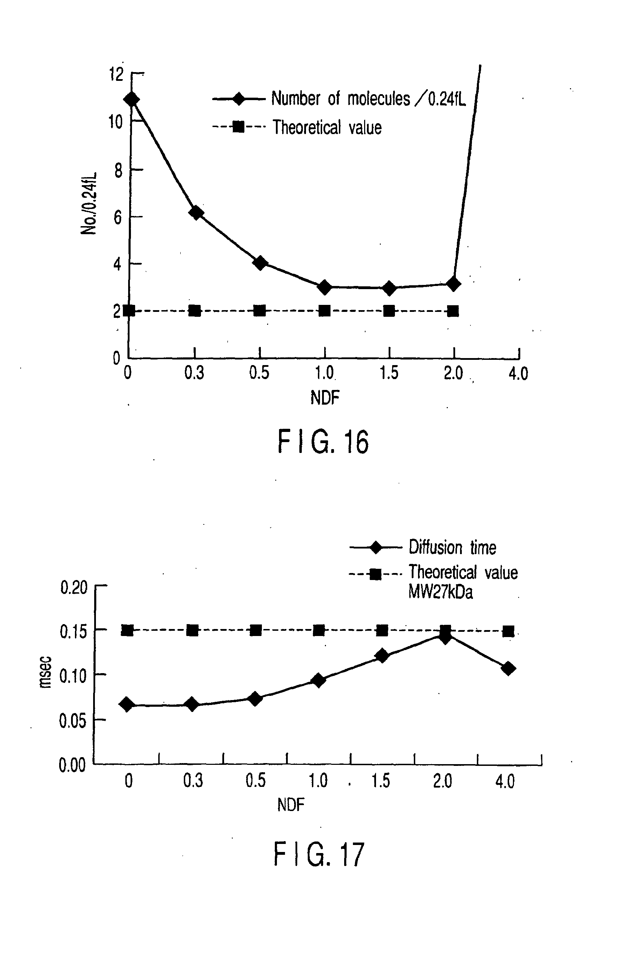

FIG. 16 and FIG. 17 show the results. The abscissa in FIGS. 16 and 17 indicates the NDF filters. The ordinate in FIG. 16 indicates number of molecules per confocal region (0.24 fL), and the ordinate in FIG. 17 indicates the diffusion time. As is understood, in the case of NDFs 1.0, 1.5 and 2.0, number of molecules close to theoretical values are indicated. In the case of NDF 2.0, a diffusion time close to the theoretical value is indicated.

Since the radiated laser beam intensity was 10 mW, when the NDFs 2.0, 1.5 and 1.0 were used, the laser intensity was attenuated to 0.1 mW, 0.3 mW and 1 mW. It was thus understood that the optical laser intensity is 0.1 to 1 mW, and preferably 0.1 mW.

(Example 3)

[Relationship between Z-axis fluorescence intensity distribution and setting of autocorrelation function]

The intensity of fluorescence from laser-excited fluorescent molecules, which comes from a confocal region formed by laser irradiation, was measured. Thereby, it was examined whether an autocorrelation function was successfully set by FCS measurement.

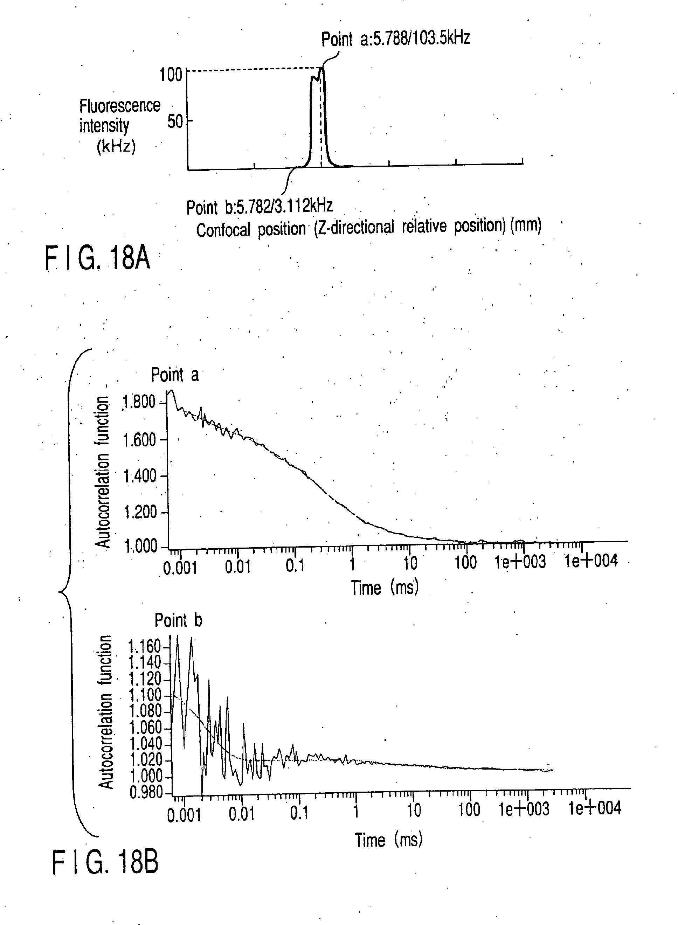

FIG. 18 shows the result. A sample cell, which was used, is a cell wherein a fusion protein between fluorescent protein (GFP) and human estrogen receptor β (hERβ) was expressed. A Z-axis (optical-axis) fluorescence intensity distribution was measured in a range of about 20 μm in an upward direction (i.e. toward the sample cell) from the upper surface of the substrate, on which the sample cell adhered. FIG. 18A shows a fluorescence intensity curve representing the measurement result. FCS measurement was conducted using two points: point a indicative of a fluorescence peak value, and a point b at which no fluorescence was observed. FIG. 18B shows autocorrelation functions that were set when FCS measurement was conducted at points a and b.
A proper autocorrelation function was set from FCS measurement data only at the point a at which fluorescence was observed. Accordingly, it was proved that the proper autocorrelation function can be set by measuring the Z-axis fluorescence intensity curve, as shown in FIG. 18A, forming the confocal region near the peak value, and performing the FCS measurement.

(Example 4)

[Comparison between intracellular fluorescence intensity distribution data by FCS measurement and intracellular fluorescent molecule distribution data by confocal laser scanning microscope]

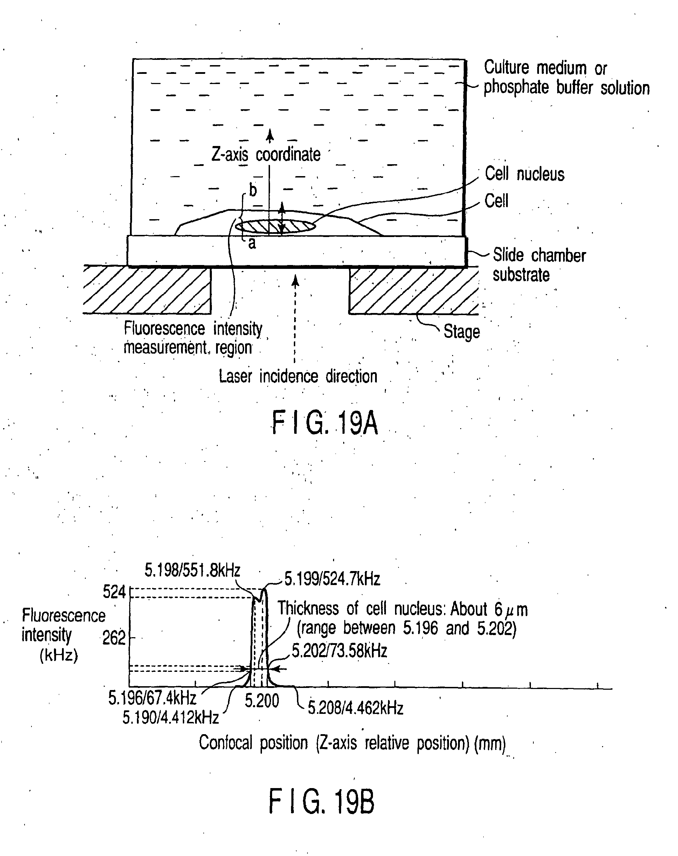

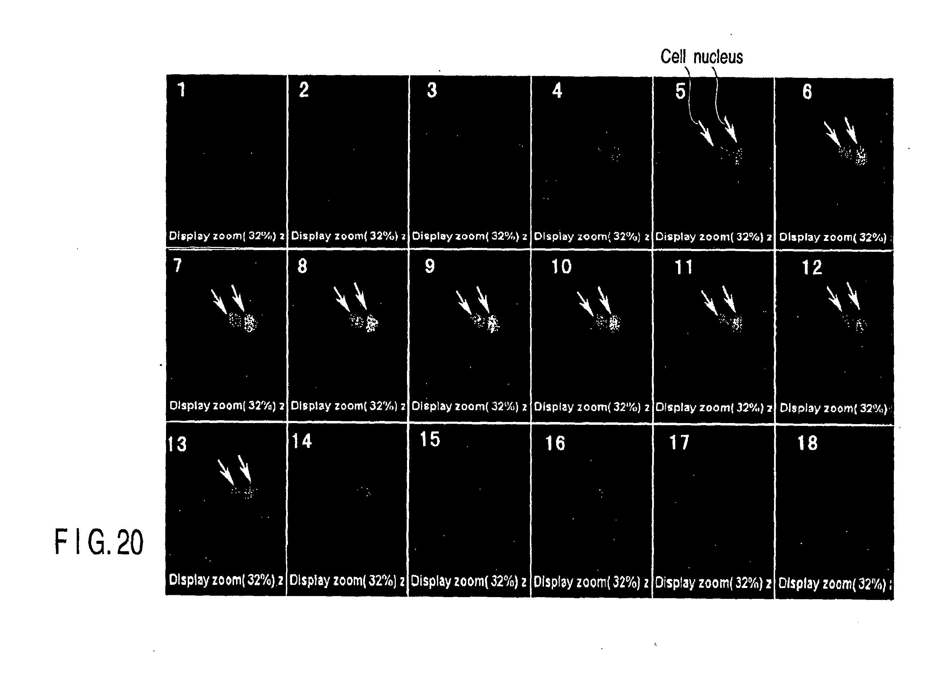

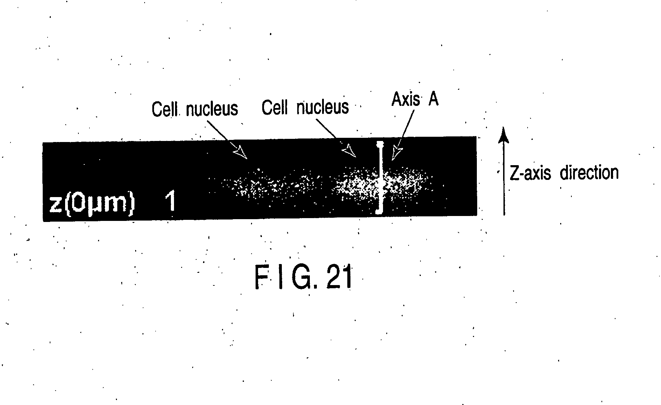

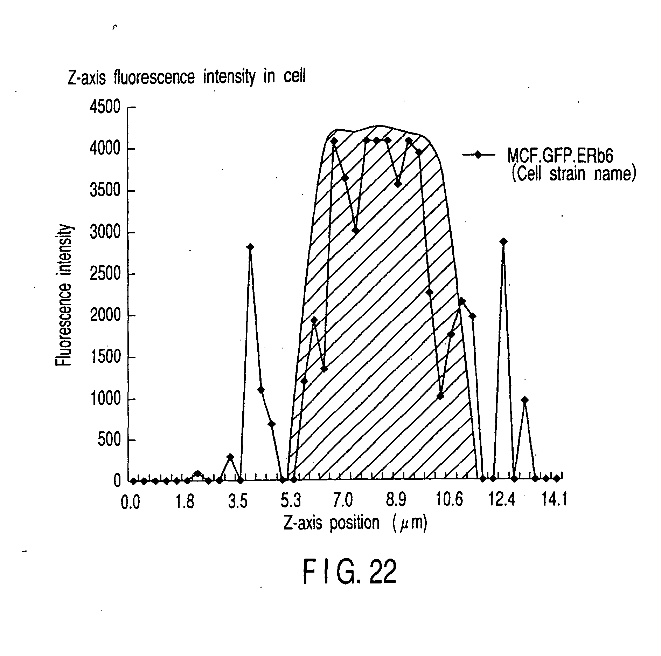

In the FCS measurement, Z-axis (optical-axis) fluorescence intensity distribution data was acquired with respect to a to-be-measured cell, and it was confirmed, as stated below, whether an intracellular fluorescent molecule distribution was properly detected. A sample, which was used, is a cell wherein a fusions protein between green fluorescent protein (GFP) and human estrogen receptor β (hER β) was expressed. A Z-axis fluorescence intensity distribution was acquired by FCS measurement. On the other hand, fluorescent molecule distribution data was acquired by a confocal laser scanning microscope. Both data items were compared. FIGS. 19 to 22 show the results.
It was confirmed that the fusion protein of GFP and hERβ emits GFP-derived green fluorescence when it is irradiated with a laser beam having a wavelength in the vicinity of 488 nm. Since the hERβ is an intranuclear receptor protein, it was confirmed in advance by observation with the fluorescence microscope that the fusion protein of hERβ is present within the cell nucleus.
In the FCS measurement, the XY coordinates of a confocal region are set at the center of the nucleus in the cell cultured in the slide chamber. Then, a fluorescence intensity distribution was measured in the thickness direction (Z-axis direction) of the cell. FIG. 19A shows the state of the measurement, and FIG. 19B shows the measurement result. The thickness of the cell nucleus including the fusion protein was approximated from the fluorescence intensity distribution of FIG. 19B. From FIG. 19B, it was suggested that the thickness of the cell nucleus was about 6 μm.
On the other hand, using the confocal laser microscope, as shown in FIG. 20, slice fluorescent images in the XY plane were acquired at predetermined intervals in the thickness direction of the cell. Then, as shown in FIG. 21, the acquired images are stacked in the Z-axis direction by image analysis software so as to constitute a three-dimensional image, and thus an XY-axis planar image of the nucleus including the fluorescent molecules was constructed. Using this image, Z-axis fluorescence distribution data was acquired along a line extending through the center of the cell nucleus, and the data was plotted as a graph as shown in FIG. 22. Thereby, the thickness of the cell nucleus was approximated.
Images 1 to 18 in FIG. 20 are slice images obtained by scanning fluorescence in the cell with the expressed GFP/ERβ in the XY plane in a range of about 12 μm at intervals of 0.7 μm along the Z-axis. The fluorescence coming from the cell nucleus wherein the fluorescent molecules are present appears from image 5 and disappears in image 13. It was therefore suggested that the thickness of the cell nucleus in the Z-axis direction was about 6 μm.
In FIG. 22, the ordinate indicates the fluorescence intensity and the abscissa indicates the relative position (μm) in the Z-axis direction, A region of the nucleus, where fluorescent molecules are uniformly present, is between position 5.3 and position 11.3 in the Z-axis direction, as indicated by hatching in the graph. It was therefore suggested that the Z-axis thickness of the nucleus was about 6 μm.
This result demonstrates that the size of the nucleus computed from the FCS-measured fluorescence intensity distribution data coincides with the size of the nucleus derived from the observation using the confocal laser scanning microscope. Therefore, it was proved that the use of the method of the present invention can properly set the confocal region at a position where intracellular fluorescent molecules are present.

(Example 5)

[FCS measurement of diffusion time of GFP/ERβ fusion protein being locally present in cell nucleus]

1. Preparation of cell sample

A fusion gene (sequence ID No: 1) between *Aequoria* victoria-derived green fluorescent protein (GFP) gene and human estrogen receptor β (hERβ) gene (GENBANK AB006590), which was incorporated in an expression vector, was transfected into a human mammary tumor-derived cultured cell strain MCF-7. Thus, a cell clone (MCF-7/GFP/hERβ), wherein the fusion protein (GFP/hERβ) of GFP and hERβ is stably expressed, was obtained. Using the MCF-7/GFP/hER β cell, the diffusion time of the GFP/hER β fusion protein was measured by FCS.
The MCF-7 cell is an adherent proliferation type cell, and it adheres to a bottom surface of an incubator and proliferates. It is understood, from observation with a fluorescence microscope, that the GFP/hERβ fusion protein is locally present in the nucleus of the cell.
Prior to FCS measurement, a proper amount (about $1 \times 10^3$/cell) of MCF-7/GFP/hERβ cells was seeded in a Lab-Tek chamber (Nunc, Cat#136439) and was cultured in a 10% FBS (fetal bovine serum)-added MEM culture medium for one to two days at 37°C in a 5% $CO_2$ incubator. Immediately before the measurement, the culture medium was removed and a culture medium of phenol red and serum-free DMEM or Dulbecco PBS was substituted. The FCS measurement was conducted in the substituted culture medium.
The Lab-Tek chamber, in which the cells were seeded and the DMEM or PBS was substituted for the culture medium, was placed on the stage of the FCS apparatus. Bright-field observation was first conducted to study the form of the MCF-7/GFP/hER β cell.

2. Detection of the upper surface of substrate of slide chamber

The Z-axis coordinate of the upper surface of the substrate of the slide chamber (hereinafter referred to also as Lab-Tek chamber) was detected as described below.
To start with, that portion of the Lab-Tek chamber on the stage, where the cells do not adhere, was set at the center of the visual field. Normally, the movement of the state is restricted in the horizontal and vertical directions (i.e. XYZ-directions in FIG. 10A) .
Then, an argon laser beam is applied, and the stage is vertically moved in the Z-axis direction. A confocal region (measurement region) for FCS measurement was confirmed as a luminescent spot by the microscope and the stage was fixed.
Subsequently, Z-axis fluorescence intensity scanning was conducted on that part of the chamber, where no cells adhere. Then, the upper surface of the substrate on which cells adhere was detected.
The Lab-Tek chamber of Nunc, which was used, has a glass-plate substrate about 130 μm thick, on which cells adhere. The substrate has a uniform thickness and high flatness. In the measurement, the lower surface of the substrate is in contact with water dropped on the objective lens, and the upper surface of the substrate is in contact with DMEM or PBS. Thus, if Z-axis fluorescence scanning was conducted, weak fluorescence intensity peaks were confirmed at the lower and upper surfaces of the substrate. Thereby, the Z-axis positions of the upper and lower surfaces of the substrate were detected. Moreover, since the peak associated with the upper surface is higher than the peak associated with the lower surface, the upper and lower surfaces were distinctly detected (see FIG. 10B).

3. Measurement of intracellular fluorescent molecule distribution

After the Z-axis coordinate of the upper surface of the substrate with the adhered cells was detected, as described above, the Z-axis coordinate of the confocal position was once set at the upper surface of the substrate and the Z-axis position of the stage was fixed.
Next, the restriction to movement in the XY directions (parallel to the surface of the substrate) was released, and the part of the substrate with the adhered cells was moved to the center of visual field while the cultured cells were being confirmed by the microscope. If the laser beam is radiated at this position, the confocal region can be observed as a pinhole-like luminescent spot. Further, the position of the stage was finely adjusted in the XY-directions and the position of the stage in the XY-directions was fixed at the position where the confocal region was brightly observed. While the laser beam was being radiated on the sample at this XY-coordinate position, a fluorescence intensity distribution was measured along the Z-axis (perpendicular to the surface of the substrate) in a range of about 20 μm, upward from the upper surface of the substrate. FCS measurement was conducted on the point where no fluorescence was observed and the points where the fluorescence peak value was indicated.
The result demonstrated that a proper autocorrelation function was set from FCS measurement data only at the point at which fluorescence was observed (see FIG. 18).

(Example 6)

TE solutions (Tris-EDTA; 10mM Tris-Cl, 1 mM EDTA) were used as solvents for GFP molecule-containing solutions. Samples with six concentrations (0.01 nM, 0.1 nM, 1 nM, 10 nM, 100 nM, 1000 nM) were prepared with a common ratio of concentration being set at 10, and FCS measurement and FIDA measurement were performed for 20 μL of each sample. The measurement time was 60 seconds, and a mean value and a standard deviation of number of molecules in three measurement operations for each sample were measured, as shown in Table 2.

Table 2

|  |  | FCS |  | FIDA |  |
| --- | --- | --- | --- | --- | --- |
|  |  | C | Tdiff | C | Q |
| GFP 100nM | Mean | 120.75 | 437.82 | 151.84 | 17.14 |
|  | S.D. | 2.11 | 26.09 | 1.77 | 0.16 |
|  | CV(%) | 1.75 | 5.96 | 1.16 | 0.93 |
| GFP 10nM | Mean | 9.01 | 483.65 | 8.83 | 34.27 |
|  | S.D. | 0.07 | 11.65 | 0.06 | 0.29 |
|  | CV (%) | 0.81 | 2.41 | 0.66 | 0.85 |
| GFP 1nM | Mean | 1.08 | 506.72 | 1.04 | 30.34 |
|  | S.D. | 0.02 | 21.33 | 0.01 | 1.06 |
|  | CV (%) | 2.03 | 4.21 | 1.33 | 3.49 |
| GFP 0.1nM | Mean | 0.34 | 478.90 | 0.22 | 23.70 |
|  | S.D. | 0.02 | 64.75 | 0.01 | 1.58 |
|  | CV (%) | 4.53 | 13.52 | 4.33 | 6.65 |
| GFP 0.01nM | Mean | 0.57 | 557.01 | 0.29 | 8.84 |
|  | S.D. | 0.13 | 73.60 | 0.06 | 2.43 |
|  | CV (%) | 22.15 | 13.21 | 19.75 | 27.46 |

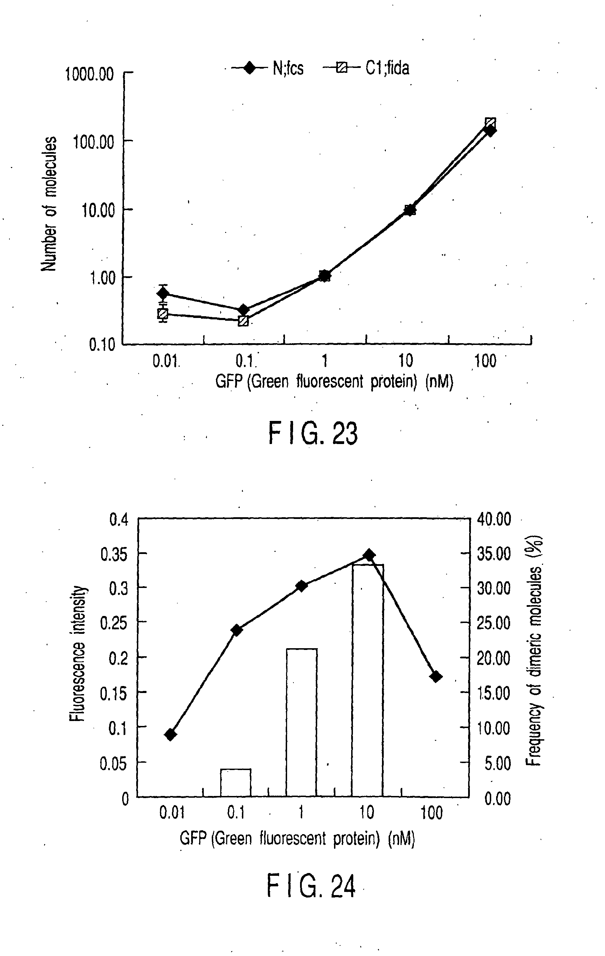

FIG. 23 shows the relationship between GFP concentrations and measured number of molecules obtained in FCS and FIDA measurements. At the concentration of 1 to 100 nM, the number of molecules were proportional. At the other low and high concentrations, no concentration-dependency was recognized. In the FCS and FIDA measurements, the measurable number of molecules per confocal region is 100 at an upper limit for measurement. Hence, the number of molecules capable of being measured in a concentration-dependent manner is about 1 to 100. It was understood that in terms of concentration, a general value is 0.01 to 700 nM, preferably 0.1 to 500 nM, and more preferably 1 to 100 nM.

Table 3 shows measurement results. In Table 3, the data in Table 2 is used and dimerization is supposed, setting the brightness (Q) of 23 kHz at the concentration of 0.1 nM GFP to be the fluorescence intensity (brightness) of a monomer.

Table 3

|  | Function | C1 | Q1 | C2 | Q2 | dimer |
| --- | --- | --- | --- | --- | --- | --- |
| GFP 10nM | Mean | 6.56745 | 23 | 3.294326 | 46 | 33% |
|  | S.D. | 0.147607 | 0 | 0.095366 | 0 |  |
| GFP 1nM | Mean | 0.892535 | 23 | 0.239627 | 46 | 21% |
|  | S.D. | 0.026959 | 0 | 0.033364 | 0 |  |

Table 3 (continued)

|  | Function | C1 | Q1 | C2 | Q2 | dimer |
|---|---|---|---|---|---|---|
| GFP 0.1nM | Mean | 0.209728 | 23 | 0.008462 | 46 | 4% |
|  | S.D. | 0.005966 | 0 | 0.005338 | 0 |  |

C1: concentration of a monomer, Q1: brightness of a monomer, C2: concentration of a dimer, and Q2: brightness of a dimer. The ratio of dimers to the total number of molecules is 33%, 21% and 4% in relation to GFP concentrations 10 nM, 1 nM and 0.1 nM, respectively. As is understood, the higher the GFP concentration, the greater the number of molecules floating in dimeric form. FIG. 24 shows the data.

In the FIDA analysis method used here, excitation light emitted from laser-irradiated fluorescent molecules in the sample is measured by an APD (high-sensitivity photodetector). The measured fluorescence signal is decomposed in a very short unit time of 40 $\mu$ sec, and the resultant photon count is subjected to a statistical-process analysis based on double-Poisson distribution analysis. As a result, a molecular fluorescence intensity (brightness; qn) and number of molecules (cn) are calculated. Even when there are a plurality of kinds of molecules, they can be distinguished by distribution analysis. A numerical value obtained by multiplying the brightness and number of molecules of each kind of molecules is calculated as a total fluorescence amount. If the intracellular fluorescent molecules are measured by the FIDA method, the agglutination state can be discriminated with high resolving power. Hence, as regards the GFP fusion receptor-introduced cell, polymerization due to agglutination peculiar to GFP or physiological polymerization due to ligand can advantageously be discriminated. According to FIDA method, fluorescence intensity (brightness) per molecule can be analyzed. Thus, dimerization of molecules can clearly be distinguished by a difference of double the fluorescence intensity, relative to a monomer. In other words, when molecules are dimerized, the fluorescence intensity of each molecule of dimer molecules can be detected as a fluorescence intensity of double the fluorescence intensity of the monomer. Therefore, dimerization of molecules can clearly be analyzed.

Industrial Applicability

As has been described above, the fluorescence analysis apparatus and fluorescence analysis method according to the present invention are effective in analyzing molecular-level behaviors of fluorescence-labeled biomolecules (in particular, intracellular biomolecules)

**Claims**

1. A fluorescence analysis apparatus
   **characterized by** comprising:

   a laser light source;
   an optical system that converges a light beam from the laser light source on a sample including fluorescent molecules, thus forming a confocal region;
   an optical system that converges fluorescence from the sample;
   a photodetector that detects the converged fluorescence; and
   fluorescence intensity recording means for recording a change in fluorescence intensity of the fluorescence detected by the photodetector,

   wherein after the light beam is radiated on the sample for a predetermined time period, the fluorescence intensity of the fluorescence from the fluorescence molecule excited by the light beam is measured, thereby acquiring analysis data relating to the fluorescence molecules.

2. A fluorescence analysis apparatus
   **characterized by** comprising:

   a laser light source;
   an optical system that converges a light beam from the laser light source on a sample including. fluorescent molecules, thus forming a confocal region;
   an optical system that converges fluorescence from the sample;
   a photodetector that detects the converged fluorescence;
   fluorescence intensity recording means for recording a change in fluorescence intensity of the fluorescence detected by the photodetector; and
   fluorescence intensity attenuation ratio detection means for detecting an attenuation ratio of a fluorescence intensity after a predetermined elapsed time, relative to an initial fluorescence intensity recorded by the fluorescence intensity recording means,

   wherein (i) a fluorescence analysis is performed when a value of the attenuation ratio detected by the fluorescence intensity attenuation ratio detection means is less than a predetermined first value, (ii) further radiation of the light beam on the sample is successively performed and the attenuation ratio in fluorescence intensity is detected once again when the value of the attenuation ratio detected by the fluorescence intensity attenuation ratio detection means is not less than the predetermined first value and is less than a predetermined second value, and (iii) the light beam is radiated on the sample with a decreased intensity of the light beam and the attenuation ratio in fluorescence intensity is detected once again when the value of the attenuation ratio detected by the fluorescence intensity attenuation ratio detection means is not less than the predetermined second value.

3. The fluorescence analysis apparatus according to claim 2, **characterized in that** in a case where the value of the attenuation ratio detected by the fluorescence intensity attenuation ratio detection means is less than the predetermined first value and the fluorescence intensity detected by the photodetector is not less than a predetermined value, a measurement region of the sample is altered and a fluorescence analysis is performed on a region with a lower fluorescence intensity.

4. The fluorescence analysis apparatus according to claim 2, **characterized in that** in a case where the value of the attenuation ratio detected by the fluorescence intensity attenuation ratio detection means is less than the predetermined first value and the fluorescence intensity detected by the photodetector is less than a predetermined value, a fluorescence analysis is performed and fluorescence analysis data is acquired only when an acquired fluorescence signal value is not less than a theoretical value of a diffusion time.

5. A fluorescence analysis apparatus
   **characterized by** comprising:

   a laser light source;
   an optical system that converges a light beam from the laser light source on a sample including fluorescent molecules, thus forming a confocal region;

an optical system that converges fluorescence from the sample;

a photodetector that detects the converged fluorescence;

fluorescence intensity recording means for recording a change in fluorescence intensity of the fluorescence detected by the photodetector; and

light intensity adjusting means for adjusting an intensity of the light beam from the laser light source.

**6.** A fluorescence analysis method for analyzing behaviors of fluorescent molecules, **characterized by** comprising:

(a) a step of converging a light beam from a laser light source on a sample including fluorescent molecules, forming a confocal region, and radiating the light beam on the sample for a predetermined time period; and

(b) a step of radiating, following the step (a), the light beam from the laser light source onto the sample and forming a confocal region, detecting a fluorescence intensity of fluorescence from the fluorescent molecules in the confocal region, and performing a fluorescence analysis.

**7.** A fluorescence analysis method for analyzing behaviors of fluorescent molecules, **characterized by** comprising:

(a) a step of converging a light beam from a laser light source on a sample including fluorescent molecules, and forming a confocal region;

(b) a step of detecting a fluorescence intensity of fluorescence from the fluorescent molecules within the confocal region formed in the step (a);

(c) a step of radiating the light beam for a predetermined time period after the detection of the fluorescence intensity in the step (b), and then detecting the fluorescence intensity of the fluorescence from the fluorescent molecules within the confocal region;

(d) a step of comparing the fluorescence intensities detected in the steps (b) and (c), and detecting an attenuation ratio in the fluorescence intensity; and

(e) a step of (i) performing a fluorescence analysis when the attenuation ratio detected in the step (d) is less than a predetermined first value, (ii) performing further radiation of the light beam on the sample and conducting the steps from the step (a) once again when the attenuation ratio detected in the step (d) is not less than the predetermined first value and is less than a predetermined second value, and (iii) radiating the light beam on the sample with a decreased intensity of the light beam and conducting the steps from the step (a) once again when the attenuation ratio detected in the step (d) is not less than the predetermined second value.

**8.** The fluorescence analysis method according to claim 7, **characterized in that**, in the step (e), a measurement region of the sample is altered and a fluorescence analysis is performed on a region with a lower fluorescence intensity, in a case where the attenuation ratio in fluorescence intensity detected in the step (d) is less than the predetermined first value and the fluorescence intensity detected in the step (c) is not less than a predetermined value.

**9.** The fluorescence analysis method according to claim 7, **characterized in that**, in the step (e), a fluorescence analysis is performed and fluorescence analysis data is acquired only when an acquired fluorescence signal value is not less than a theoretical value of a diffusion time, in a case where the attenuation ratio in fluorescence intensity detected in the step (d) is less than the predetermined first value and the fluorescence intensity detected in the step (c) is less than a predetermined value.

**10.** A fluorescence analysis method for analyzing behaviors of fluorescent molecules, **characterized by** comprising:

(a) a step of converging a light beam from a laser light source on a sample having a cell including no fluorescent molecules, and forming a confocal region;

(b) a step of detecting a fluorescence intensity of fluorescence from the cell within the confocal region formed in the step (a);

(c) a step of adjusting an intensity of the light beam such that the fluorescence intensity detected in the step (b) becomes not higher than a predetermined value;

(d) a step of radiating the light beam on a cell including fluorescent molecules with the intensity of the light beam adjusted in the step (c), and forming a confocal region; and

(e) a step of detecting fluorescence from the fluorescent molecules within the confocal region in the cell formed in the step (d), and performing a fluorescence analysis.

**11.** A fluorescence analysis apparatus

**characterized by** comprising:

a laser light source;

a sample stage that supports a substrate on which a sample including fluorescent molecules is placed;

an optical system that converges a light beam from the laser light source on the sample, thus forming a confocal region;

a scanning mechanism that moves the confocal region by scanning over the sample;

an optical system that converges fluorescence'from the sample;

a photodetector that detects the converged fluorescence; and

fluorescence intensity recording means for recording a change in fluorescence intensity of the fluorescence detected by the photodetector,

wherein the confocal region is moved over the sample on the substrate by the scanning mechanism, the confocal region is set at an area in a vicinity of an area where the fluorescence intensity recorded by the fluorescence intensity recording means takes a maximum value, the light beam from the laser light source is radiated on the fluorescent molecules, and the fluorescence intensity of fluorescence from the fluorescent molecules excited by the light beam is measured, whereby analysis data relating to 'the fluorescent molecules is acquired.

**12.** The fluorescence analysis apparatus according to claim 11, **characterized in that** the sample on the substrate is scanned in a direction perpendicular to a surface of the substrate by the scanning mechanism, and the confocal region is set at an area in a vicinity of an area where the fluorescence intensity recorded by the fluorescence intensity recording means takes a maximum value.

**13.** The fluorescence analysis apparatus according to claim 12, **characterized in that** the sample on the substrate is scanned in a plane parallel to the substrate by the scanning mechanism, and then, in the area in the vicinity of the area where the fluorescence intensity recorded by the fluorescence intensity recording means takes the maximum value, scanned in a direction perpendicular to a surface of the substrate by the scanning mechanism, thus setting the confocal region.

**14.** The fluorescence analysis apparatus according to any one of claims 11 to 13, **characterized by** further comprising:

fluorescence intensity maximum-value recording means for recording a maximum value of the fluorescence intensity obtained when the confocal region is moved by scanning in a direction perpendicular to a surface of the substrate, and recording a relative position of the confocal region to the substrate, wherein the confocal region is formed by converging the light beam from the laser light source on a portion of a culture medium or a buffer solution on the substrate, where no fluorescent molecules are present,

wherein the relative position of the confocal region to the substrate, where a maximum value of fluorescence intensity is recorded by the fluorescence intensity maximum-value recording means, is set to be a position of an upper surface of the substrate, and the scanning mechanism moves the confocal region by scanning only from the upper surface of the substrate to a side where the sample is placed.

**15.** A fluorescence analysis method for analyzing behaviors of fluorescent molecules, **characterized by** comprising:

(a) a step of placing a sample including fluorescent molecules on a substrate, converging a light beam from a laser light source on the substrate, and forming a confocal region;

(b) a step of moving the confocal region formed in the step (a) by scanning over the sample on the substrate, and measuring a fluorescence intensity distribution of fluorescence from the fluorescent molecules;

(c) a step of converging the light beam from the laser light source on an area in a vicinity of an area where a maximum value of intensity of the fluorescence measured in the step (b) is detected, and forming a confocal region; and

(d) a step of measuring a fluorescence intensity of fluorescence from the fluorescent molecules excited by the light beam, which comes from the confocal region formed in the step (c), thereby analyzing behaviors of the fluorescent molecules.

**16.** The fluorescence analysis method for fluorescent molecules according to claim 15, **characterized in that** in the step (b), the confocal region is moved by scanning over the sample on the substrate in a direction perpendicular to a surface of the substrate, thereby measuring a fluorescence intensity distribution of fluorescence from the fluorescent molecules.

17. The fluorescence analysis method for fluorescent molecules according to claim 16, **characterized in that** prior to the step (b), the sample on the substrate is scanned in a direction parallel to the surface of the substrate, following which the step (b) is carried out in a vicinity of an area where a maximum value of fluorescence intensity is detected.

18. The fluorescence analysis method for fluorescent molecules according to any one of claims 15 to 17, **characterized in that** prior to the step (a), the light beam from the laser light source is converged on a portion of a culture medium or a buffer solution, where no fluorescent molecules are present, thus forming a confocal region, and wherein a position, where a maximum value of the fluorescence intensity is detected when the confocal region is moved by scanning in a direction perpendicular to a surface of the substrate, is set to be a position of an upper surface of the substrate, and the confocal region is moved by scanning in the step (b) only from the upper surface of the substrate to a side where the sample is placed.

19. A fluorescence analysis apparatus
**characterized by** comprising:

   a laser light source;
   a sample stage that supports a substrate on which a sample including fluorescent molecules is placed;
   an optical system that converges a light beam from the laser light source on the sample, thus forming a confocal region;
   a scanning mechanism that moves the confocal region by scanning over the sample;
   an optical system that converges fluorescence from the sample;
   a photodetector that detects the converged fluorescence; and
   fluorescence intensity recording means for recording a change in fluorescence intensity of the fluorescence detected by the photodetector,

   wherein the confocal region is moved by scanning over the sample on the substrate by the scanning' mechanism, and the confocal region is set at an area in a vicinity of an area where the fluorescence intensity recorded by the fluorescence intensity recording means takes a maximum value, and
   wherein the light beam from the laser light source is radiated on the fluorescent molecules in the sample after the light beam is radiated on the sample for a predetermined time period, and the fluorescence intensity of fluorescence from the fluorescent molecules excited by the light beam is measured, whereby analysis data relating to the fluorescent molecules is acquired.

20. A fluorescence analysis method for analyzing behaviors of fluorescent molecules, **characterized by** comprising:

   (a) a step of placing a sample including fluorescent molecules on a substrate, converging a light beam from a laser light source on the substrate, and forming a confocal region;
   (b) a step of moving the confocal region formed in the step (a) by scanning over the sample on the substrate, and measuring a fluorescence intensity distribution of fluorescence from the fluorescent molecules;
   (c) a step of converging the light beam from the laser light source on an area near an area where a maximum value of intensity of the fluorescence measured in the step (b) is detected, and forming a confocal region;
   (d) a step of radiating the light beam on the sample for a predetermined time period; and
   (e) a step of radiating, following the step (d), the light beam from the laser light source on the sample and forming a confocal region, detecting a fluorescence intensity of fluorescence from the fluorescent molecules in the confocal region, and performing a fluorescence analysis.

FIG. 1

FIG. 2

EP 1 351 048 A1

F I G. 3

F I G. 4

Settings before experiment
1.Measure fluorescence intensity per fluorescent molecule
2.Calculate diffusion time from molecular weight and molecular size

Determine fluorescence intensity per fluorescent molecule ; means ①

{(Fluorescence intensity per fluorescent molecule) ×100}=value A

Attenuation ratio ; 50~100%

Lower laser irradiation intensity ; means ②

Attenuation ratio ; 20~50%

Successive laser irradiation (1~5 minutes) ; means ⑤ means ⑥

Attenuation ratio ; 0~20%

Value B

Fluorescence intensity ≧ value A

Fluorescent molecule concentration ≧ deterction limit value

Shift measurement region to region with lower fluorescence intensity

Fluorescence intensity < value A

Fluorescence signal < theoretical value of diffusion time

FCS data acquisition (Negative)
Fluorescence intensity = value B ; means ④

Fluorescence signal ≧ theoretical value of diffusion time

FCS data acquisition (Positive)

Means ①·2

Weak ← Fluorescence intensity → Strong

Negative | Positive | Most positive

Means ④

F I G. 5

Fluorescence intensity maximum-value recording means

38

23

Laser light source

21

Z-axis direction

Y-axis direction

X-axis direction

Slide chamber with cultured sample cells

37

Fluorescence intensity recording means

22

30d
30c

30a

30b

30

25

26

27

29

36

24

28

31

32

Photodetector (APD)

35

34

33

APD : Avalanche photo diode

FIG. 6

Z-axis direction

Culture medium or PBS

44

43

41

45

42

FIG. 7A

47

46

FIG. 7B

Sample stage serving also as
X-movement directional block

Y-directional
movement block

Z-directional
movement block

Support section

F I G. 8

Y-axis direction

Sample cell

Point P

d

PY

c

Cell nucleus

a
PX
b

X-axis direction

F I G. 9A

Z-axis direction

Sample cell

Cell nucleus

f
PZ
e

Point P

Slide chamber substrate

F I G. 9B

Culture medium or
phosphate buffer solution

Z-axis coordinate

Y-axis coordinate

X-axis coordinate

Slide chamber substrate

b

a

Fluorescence intensity
measurement region

Stage

Laser incidence direction

# F I G. 10A

5.265/1.757kHz
(Upper surface of substrate)

2.5

Fluorescence
intensity   1.4
(kHz)

5.139/0.610kHz
(Lower surface of substrate)

0.29

a
5.000    5.060    5.120    5.180    5.240    Z   5.300    5.360    5.500    b

Confocal position (Z-axis relative position) (mm)

# F I G. 10B

FIG. 11A

FIG. 11B

F I G. 12A

F I G. 12B

FIG. 13

F I G. 14

F I G. 15

FIG. 16

FIG. 17

Point a:5.788/103.5kHz

100

Fluorescence
intensity
(kHz)

50

Point b:5.782/3.112kHz
Confocal position (Z-directional relative position) (mm)

## F I G. 18A

Point a

Autocorrelation function

1.800

1.600

1.400

1.200

1.000

0.001    0.01    0.1    1    10    100    1e+003    1e+004

Time (ms)

Point b

Autocorrelation function

1.160
1.140
1.120
1.100
1.080
1.060
1.040
1.020
1.000
0.980

0.001    0.01    0.1    1    10    100    1e+003    1e+004

Time (ms)

## F I G. 18B

Culture medium or phosphate buffer solution

Z-axis coordinate

b

Cell nucleus

Cell

a

Slide chamber substrate

Fluorescence intensity measurement, region

Stage

Laser incidence direction

F I G. 19A

5.198/551.8kHz

5.199/524.7kHz

524

Fluorescence intensity (kHz)

Thickness of cell nucleus: About 6 $\mu$m (range between 5.196 and 5.202)

262

5.202/73.58kHz

5.196/67.4kHz

5.200

5.208/4.462kHz

5.190/4.412kHz

Confocal position (Z-axis relative position) (mm)

F I G. 19B

F I G. 20

FIG. 21

FIG. 22

F I G. 23

F I G. 24

## INTERNATIONAL SEARCH REPORT

| International application No. |
| --- |
| PCT/JP01/10998 |

| A. CLASSIFICATION OF SUBJECT MATTER |
| --- |
| Int.Cl$^7$ G01N21/64 |

According to International Patent Classification (IPC) or to both national classification and IPC

| B. FIELDS SEARCHED |
| --- |
| Minimum documentation searched (classification system followed by classification symbols) |
| Int.Cl$^7$ G01N21/62-21/74 |

Documentation searched other than minimum documentation to the extent that such documents are included in the fields searched

| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)
JICST FILE(JOIS)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y<br>A | JP, 11-326208, A (Laboratory of Molecular<br>Biophotonics),<br>26 November, 1999 (26.11.99),<br>Full text; Fig. 4<br>(Family: none) | 1,5,6<br>2,7,10-20<br>3,4,8,9 |
| Y | JP, 5-256765, A (Hitachi, Ltd.),<br>05 October, 1993 (05.10.93),<br>Full text; Figs. 1 to 5<br>(Family: none) | 2,7,10 |
| Y | JP, 11-305140, A (Yokogawa Electric Corp.),<br>05 November, 1999 (05.11.99),<br>Full text; Figs. 1, 8<br>(Family: none) | 11-20 |
| Y | JP, 5-284998, A (Hitachi, Ltd.),<br>02 November, 1993 (02.11.93),<br>Par. Nos. [0028] to [0029]<br>(Family: none) | 11,14,15,17,<br>19,20 |

| ☒ Further documents are listed in the continuation of Box C. | ☐ See patent family annex. |
| --- | --- |

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>07 March, 2002 (07.03.02) | Date of mailing of the international search report<br>19 March, 2002 (19.03.02) |
| --- | --- |
| Name and mailing address of the ISA/<br>Japanese Patent Office | Authorized officer |
| Facsimile No. | Telephone No. |

Form PCT/ISA/210 (second sheet) (July 1998)

**EP 1 351 048 A1**

<table>
<tr><td colspan="2" align="center">INTERNATIONAL SEARCH REPORT</td><td>International application No.<br>PCT/JP01/10998</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP, 9-43147, A (Laboratory of Molecular Biophotonics), 14 February, 1997 (14.02.97), Par. No. [0010] (Family: none) | 2,7,10 |

Form PCT/ISA/210 (continuation of second sheet) (July 1998)

SEQUENCE LISTING

<110> OLYMPUS OPTICAL CO., LTD.

<120> Device for analyzing fluorescence and method for analyzing
fluorescence

<130> 01S1045P

<150> JP/2000-380327
<151> 2000-12-14

<150> JP/2001-22105
<151> 2001-01-30

<160> 1

<170> PatentIn Ver. 2.0

<210> 1
<211> 2433
<212> DNA
<213> Artificial Sequence

<220>
<221> CDS
<222> (8)..(2386)

<223> Fusion gene of GFP (Green Fluorescent Protein) gene
      and hER beta (human Estrogen Receptor beta) gene

<400> 1

```
cgccacc atg gtg agc aag ggc gag gag ctg ttc acc ggg gtg gtg ccc      49
        Met Val Ser Lys Gly Glu Glu Leu Phe Thr Gly Val Val Pro
         1               5                   10

atc ctg gtc gag ctg gac ggc gac gta aac ggc cac aag ttc agc gtg      97
Ile Leu Val Glu Leu Asp Gly Asp Val Asn Gly His Lys Phe Ser Val
 15              20                  25                  30

tcc ggc gag ggc gag ggc gat gcc acc tac ggc aag ctg acc ctg aag      145
Ser Gly Glu Gly Glu Gly Asp Ala Thr Tyr Gly Lys Leu Thr Leu Lys
                 35                  40                  45

ttc atc tgc acc acc ggc aag ctg ccc gtg ccc tgg ccc acc ctc gtg      193
Phe Ile Cys Thr Thr Gly Lys Leu Pro Val Pro Trp Pro Thr Leu Val
                 50                  55                  60

acc acc ctg acc tac ggc gtg cag tgc ttc agc cgc tac ccc gac cac      241
Thr Thr Leu Thr Tyr Gly Val Gln Cys Phe Ser Arg Tyr Pro Asp His
                 65                  70                  75

atg aag cag cac gac ttc ttc aag tcc gcc atg ccc gaa ggc tac gtc      289
Met Lys Gln His Asp Phe Phe Lys Ser Ala Met Pro Glu Gly Tyr Val
         80                  85                  90
```

```
cag gag cgc acc atc ttc ttc aag gac gac ggc aac tac aag acc cgc   337
Gln Glu Arg Thr Ile Phe Phe Lys Asp Asp Gly Asn Tyr Lys Thr Arg
 95                100             105                 110


gcc gag gtg aag ttc gag ggc gac acc ctg gtg aac cgc atc gag ctg   385
Ala Glu Val Lys Phe Glu Gly Asp Thr Leu Val Asn Arg Ile Glu Leu
                 115             120                 125


aag ggc atc gac ttc aag gag gac ggc aac atc ctg ggg cac aag ctg   433
Lys Gly Ile Asp Phe Lys Glu Asp Gly Asn Ile Leu Gly His Lys Leu
                 130             135                 140


gag tac aac tac aac agc cac aac gtc tat atc atg gcc gac aag cag   481
Glu Tyr Asn Tyr Asn Ser His Asn Val Tyr Ile Met Ala Asp Lys Gln
             145             150                 155


aag aac ggc atc aag gtg aac ttc aag atc cgc cac aac atc gag gac   529
Lys Asn Gly Ile Lys Val Asn Phe Lys Ile Arg His Asn Ile Glu Asp
         160             165                 170


ggc agc gtg cag ctc gcc gac cac tac cag cag aac acc ccc atc ggc   577
Gly Ser Val Gln Leu Ala Asp His Tyr Gln Gln Asn Thr Pro Ile Gly
175                 180             185                 190


gac ggc ccc gtg ctg ctg ccc gac aac cac tac ctg agc acc cag tcc   625
Asp Gly Pro Val Leu Leu Pro Asp Asn His Tyr Leu Ser Thr Gln Ser
                 195                 200                 205
```

gcc ctg agc aaa gac ccc aac gag aag cgc gat cac atg gtc ctg ctg    673
Ala Leu Ser Lys Asp Pro Asn Glu Lys Arg Asp His Met Val Leu Leu
            210              215              220

gag ttc gtg acc gcc gcc ggg atc act ctc ggc atg gac gag ctg tac    721
Glu Phe Val Thr Ala Ala Gly Ile Thr Leu Gly Met Asp Glu Leu Tyr
            225              230              235

aag tcc gga ctc aga tct cga gct caa gct tgt gcc tct tct tgc aag    769
Lys Ser Gly Leu Arg Ser Arg Ala Gln Ala Cys Ala Ser Ser Cys Lys
            240              245              250

gtg ttt tct cag ctg tta tct caa gac atg gat ata aaa aac tca cca    817
Val Phe Ser Gln Leu Leu Ser Gln Asp Met Asp Ile Lys Asn Ser Pro
255              260              265              270

tct agc ctt aat tct cct tcc tcc tac aac tgc agt caa tcc atc tta    865
Ser Ser Leu Asn Ser Pro Ser Ser Tyr Asn Cys Ser Gln Ser Ile Leu
            275              280              285

ccc ctg gag cac ggc tcc ata tac ata cct tcc tcc tat gta gac agc    913
Pro Leu Glu His Gly Ser Ile Tyr Ile Pro Ser Ser Tyr Val Asp Ser
            290              295              300

cac cat gaa tat cca gcc atg aca ttc tat agc cct gct gtg atg aat    961
His His Glu Tyr Pro Ala Met Thr Phe Tyr Ser Pro Ala Val Met Asn
            305              310              315

```
tac agc att ccc agc aat gtc act aac ttg gaa ggt ggg cct ggt cgg    1009
Tyr Ser Ile Pro Ser Asn Val Thr Asn Leu Glu Gly Gly Pro Gly Arg
    320             325             330


cag acc aca agc cca aat gtg ttg tgg cca aca cct ggg cac ctt tct    1057
Gln Thr Thr Ser Pro Asn Val Leu Trp Pro Thr Pro Gly His Leu Ser
335             340             345             350


cct tta gtg gtc cat cgc cag tta tca cat ctg tat gcg gaa cct caa    1105
Pro Leu Val Val His Arg Gln Leu Ser His Leu Tyr Ala Glu Pro Gln
            355             360             365


aag agt ccc tgg tgt gaa gca aga tcg cta gaa cac acc tta cct gta    1153
Lys Ser Pro Trp Cys Glu Ala Arg Ser Leu Glu His Thr Leu Pro Val
            370             375             380


aac aga gag aca ctg aaa agg aag gtt agt ggg aac cgt tgc gcc agc    1201
Asn Arg Glu Thr Leu Lys Arg Lys Val Ser Gly Asn Arg Cys Ala Ser
            385             390             395


cct gtt act ggt cca ggt tca aag agg gat gct cac ttc tgc gct gtc    1249
Pro Val Thr Gly Pro Gly Ser Lys Arg Asp Ala His Phe Cys Ala Val
    400             405             410


tgc agc gat tac gca tcg gga tat cac tat gga gtc tgg tcg tgt gaa    1297
Cys Ser Asp Tyr Ala Ser Gly Tyr His Tyr Gly Val Trp Ser Cys Glu
    415             420             425             430
```

```
gga tgt aag gcc ttt ttt aaa aga agc att caa gga cat aat gat tat   1345
Gly Cys Lys Ala Phe Phe Lys Arg Ser Ile Gln Gly His Asn Asp Tyr
            435                 440                 445


att tgt cca gct aca aat cag tgt aca atc gat aaa aac cgg cgc aag   1393
Ile Cys Pro Ala Thr Asn Gln Cys Thr Ile Asp Lys Asn Arg Arg Lys
            450                 455                 460


agc tgc cag gcc tgc cga ctt cgg aag tgt tac gaa gtg gga atg gtg   1441
Ser Cys Gln Ala Cys Arg Leu Arg Lys Cys Tyr Glu Val Gly Met Val
            465                 470                 475


aag tgt ggc tcc cgg aga gag aga tgt ggg tac cgc ctt gtg cgg aga   1489
Lys Cys Gly Ser Arg Arg Glu Arg Cys Gly Tyr Arg Leu Val Arg Arg
            480                 485                 490


cag aga agt gcc gac gag cag ctg cac tgt gcc ggc aag gcc aag aga   1537
Gln Arg Ser Ala Asp Glu Gln Leu His Cys Ala Gly Lys Ala Lys Arg
495                 500                 505                 510


agt ggc ggc cac gcg ccc cga gtg cgg gag ctg ctg ctg gac gcc ctg   1585
Ser Gly Gly His Ala Pro Arg Val Arg Glu Leu Leu Leu Asp Ala Leu
            515                 520                 525


agc ccc gag cag cta gtg ctc acc ctc ctg gag gct gag ccg ccc cat   1633
Ser Pro Glu Gln Leu Val Leu Thr Leu Leu Glu Ala Glu Pro Pro His
            530                 535                 540
```

gtg ctg atc agc cgc ccc agt gcg ccc ttc acc gag gcc tcc atg atg 1681
Val Leu Ile Ser Arg Pro Ser Ala Pro Phe Thr Glu Ala Ser Met Met
      545              550              555

atg tcc ctg acc aag ttg gcc gac aag gag ttg gta cac atg atc agc 1729
Met Ser Leu Thr Lys Leu Ala Asp Lys Glu Leu Val His Met Ile Ser
      560              565              570

tgg gcc aag aag att ccc ggc ttt gtg gag ctc agc ctg ttc gac caa 1777
Trp Ala Lys Lys Ile Pro Gly Phe Val Glu Leu Ser Leu Phe Asp Gln
575              580              585              590

gtg cgg ctc ttg gag agc tgt tgg atg gag gtg tta atg atg ggg ctg 1825
Val Arg Leu Leu Glu Ser Cys Trp Met Glu Val Leu Met Met Gly Leu
             595              600              605

atg tgg cgc tca att gac cac ccc ggc aag ctc atc ttt gct cca gat 1873
Met Trp Arg Ser Ile Asp His Pro Gly Lys Leu Ile Phe Ala Pro Asp
             610              615              620

ctt gtt ctg gac agg gat gag ggg aaa tgc gta gaa gga att ctg gaa 1921
Leu Val Leu Asp Arg Asp Glu Gly Lys Cys Val Glu Gly Ile Leu Glu
      625              630              635

atc ttt gac atg ctc ctg gca act act tca agg ttt cga gag tta aaa 1969
Ile Phe Asp Met Leu Leu Ala Thr Thr Ser Arg Phe Arg Glu Leu Lys
      640              645              650

```
ctc caa cac aaa gaa tat ctc tgt gtc aag gcc atg atc ctg ctc aat    2017
Leu Gln His Lys Glu Tyr Leu Cys Val Lys Ala Met Ile Leu Leu Asn
655             660             665             670

tcc agt atg tac cct ctg gtc aca gcg acc cag gat gct gac agc agc    2065
Ser Ser Met Tyr Pro Leu Val Thr Ala Thr Gln Asp Ala Asp Ser Ser
                675             680             685

cgg aag ctg gct cac ttg ctg aac gcc gtg acc gat gct ttg gtt tgg    2113
Arg Lys Leu Ala His Leu Leu Asn Ala Val Thr Asp Ala Leu Val Trp
                690             695             700

gtg att gcc aag agc ggc atc tcc tcc cag cag caa tcc atg cgc ctg    2161
Val Ile Ala Lys Ser Gly Ile Ser Ser Gln Gln Gln Ser Met Arg Leu
                705             710             715

gct aac ctc ctg atg ctc ctg tcc cac gtc agg cat gcg agt aac aag    2209
Ala Asn Leu Leu Met Leu Leu Ser His Val Arg His Ala Ser Asn Lys
                720             725             730

ggc atg gaa cat ctg ctc aac atg aag tgc aaa aat gtg gtc cca gtg    2257
Gly Met Glu His Leu Leu Asn Met Lys Cys Lys Asn Val Val Pro Val
735             740             745             750

tat gac ctg ctg ctg gag atg ctg aat gcc cac gtg ctt cgc ggg tgc    2305
Tyr Asp Leu Leu Leu Glu Met Leu Asn Ala His Val Leu Arg Gly Cys
                755             760             765
```

```
aag tcc tcc atc acg ggg tcc gag tgc agc ccg gca gag gac agt aaa        2353
Lys Ser Ser Ile Thr Gly Ser Glu Cys Ser Pro Ala Glu Asp Ser Lys
            770                 775                 780


agc aaa gag ggc tcc cag aac cca cag tct cag tgacgcctgg ccctgaggtg 2406
Ser Lys Glu Gly Ser Gln Asn Pro Gln Ser Gln
        785                 790


aactggccca cagaggtcac aagctga                                          2433
```